# EUROPÄISCHE PATENTSCHRIFT

(11) **EP 1 812 519 B1**
(45) Veröffentlichungstag und Bekanntmachung des Hinweises auf die Patenterteilung: **10.09.2008**
(21) Anmeldenummer: 06776609.7
(22) Anmeldetag: 04.08.2006
(51) Int. Cl.: C09C 1/62

(54) **METALLEFFEKTPIGMENTE MIT ANORGANISCH/ORGANISCHER MISCHSCHICHT, VERFAHREN ZUR HERSTELLUNG SOLCHER METALLEFFEKTPIGMENTE UND DEREN VERWENDUNG**
METAL EFFECT PIGMENTS COMPRISING A MIXED INORGANIC/ORGANIC LAYER, METHOD FOR THE PRODUCTION OF SUCH METAL EFFECT PIGMENTS, AND USE THEREOF
PIGMENTS A EFFET METALLIQUE COMPRENANT UNE COUCHE MIXTE INORGANIQUE/ORGANIQUE, LEUR PROCEDE DE PRODUCTION, ET LEUR UTILISATION

(30) Priorität: 05.08.2005 DE 102005037611
(43) Veröffentlichungstag der Anmeldung: 01.08.2007
(73) Patentinhaber: Eckart GmbH, 90763 Fürth (DE)
(72) Erfinder: HENGLEIN, Frank, 90409 Nürnberg (DE); BRAUER, Mariel, 91217 Hersbruck (DE); TRUMMER, Stefan, 90480 Nürnberg (DE)
(74) Vertreter: LOUIS, PÖHLAU, LOHRENTZ
(86) Internationale Anmeldenummer: PCT/EP2006/007737
(87) Internationale Veröffentlichungsnummer: WO 2007/017195

(56) Entgegenhaltungen:
- EP-A2- 0 477 433
- DE-A1- 19 635 085
- DE-A1- 19 820 112

## Beschreibung

Die Erfindung betrifft plättchenförmige Metalleffektpigmente mit anorganisch/organischer Mischschicht sowie ein Verfahren zur Herstellung derselben. Die Erfindung betrifft ferner die Verwendung dieser Metalleffektpigmente. Die optische Wirkung von Metalleffektpigmenten beruht auf ihrer plättchenförmigen Struktur, welche zu einer Orientierung in einem Anwendungsmedium im wesentlichen parallel zum Untergrund führt. Die plättchenförmige Struktur der orientierten Metalleffektpigmente wiederum bewirkt effektgebende Eigenschaften wie beispielsweise einen Hell/Dunkel Flop sowie einen hohen Glanz.

Der spezifische optische Effekt wird ganz wesentlich durch die Pigmentgröße und Pigmentgrößenverteilung sowie der mittleren Dicke der Metalleffektpigmente bestimmt. Metalleffektpigmente sind im Hinblick auf ihre plättchenförmige Struktur empfindlich gegenüber dem Einfluß von mechanischen Kräften, insbesondere von Scherkräften. Sie können durch zu starke Scherungen zerbrochen oder verformt werden, wodurch die effektgebenden Eigenschaften beeinträchtigt werden. Die Empfindlichkeit der Metalleffektpigmente macht sich beispielsweise darin bemerkbar, daß die Metalleffektpigmente beim Pumpen durch die Ringleitungssysteme von Automobillackierungsvorrichtungen leicht beschädigt oder zerbrochen werden. Auch müssen Metalleffektpigmente im Gegensatz zu gewöhnlichen Farbpigmenten in Naßlacke schonend eingearbeitet werden, um Beschädigungen der Metalleffektpigmente zu vermeiden. Ferner können Metalleffektpigmente nicht wie Buntpigmente durch Extrusion und anschließender Mahlung in einer Stiftmühle in den Grundlack eines Pulverlackes eingearbeitet werden. Hierbei würden sie in der Regel derart zerkleinert werden, daß die charakteristischen optischen Effekte praktisch vollständig verloren gingen.

Ein weiterer kritischer Punkt betrifft die Korrosionsbeständigkeit von Metalleffektpigmenten. Hier ist beispielsweise die Gasungsstabilität von Aluminiumpigmenten in alkalisch eingestellten Wasserlacken zu nennen. Ungeschützte Aluminiumpigmente korrodieren in diesen Medien unter Entwicklung von Wasserstoff, was auch als "Gasung" bezeichnet wird. Dieser unerwünschte Vorgang ist mit einem Explosionspotential verbunden, und außerdem verlieren aufgrund der Oxidation die Aluminiumpigmente ihre typischen optischen Eigenschaften. Zusätzlich verändert der entstehende Wasserstoff die rheologischen Eigenschaften des Lackes in negativer Weise.

Seit längerer Zeit werden daher Metalleffektpigmente mit rein anorganischen oder mit rein organischen dreidimensional vernetzten Beschichtungen versehen. Diese Beschichtungen dienen in der Regel als Korrosionsschutz gegenüber aggressiven Medien, haben oft aber auch eine mechanisch stabilisierende Wirkung. Zudem können Metallpigmente, die im Pulverlack eingesetzt werden, durch dielektrische Beschichtungen in geeigneter Weise elektrostatisch aufladbar gemacht werden.

Metallpigmente können beispielsweise mit Siliziumdioxid (US 2,885,366 und US 3,954,496) oder mit acrylathaltigen Polymeren (DE 40 30 727) beschichtet werden. Mit SiO₂ beschichtete Metallpigmente sind kommerziell verfügbar und werden von der Fa. Eckart GmbH & Co. KG unter den Bezeichnungen PCR, Hydrolan^{®} sowie Resist und Dorolan^{®} vertrieben. Siliziumdioxidschichten verleihen beispielsweise Aluminiumpigmenten eine ausgezeichnete Gasungsstabilität in wässrigen Lacksystemen. Zudem stabilisiert eine derartige Beschichtung aufgrund ihrer Härte die duktilen und scherempfindlichen Aluminiumplättchen vor dem Einfluss von Scherkräften, wie sie beispielsweise in den Ringleitungssystemen bei Automobillackierungsvorrichtungen auftreten (A. Kiehl und K. Greiwe, Progress in Organic Coatings 37 (1999) 179).

Ein ähnlicher Effekt tritt auch im Fall von Aluminiumoxidbeschichtungen auf (DE 195 20 312**,** H. Birner und K. Greiwe, Coating 11 (1997) 432). Bekannt sind auch chromatierte Aluminiumpigmente (EP 0 259 592), bei der eine dichte Mischschicht aus Aluminium- und Chromoxid für Gasungsstabilität sorgt.

Die vorteilhaften Eigenschaften, die durch rein anorganische oder rein organische dreidimensional vernetzte Beschichtungen von Metalleffektpigmenten erzielt werden, sind zu unterscheiden von unterschiedlichen Oberflächenbelegungen der Pigmente. Derartige Oberflächenbelegungen zielen immer auf die Verbesserung der anwendungstechnischen Eigenschaften, die von der Oberflächenchemie der Metalleffektpigmente beeinflußt werden. So wird beispielsweise die Benetzung der Metallpigmente direkt vom umgebenden Lackmedium beeinflußt.
So sind in der DE 198 20 112 A1 reaktive organische Orientierungshilfsmittel beschrieben, die mit einer funktionellen Gruppe auf der Oberfläche eines Metalleffektpigmentes chemisch anbinden und mit einer anderen funktionellen Gruppe an den Lack anbinden können. Die organischen Orientierungshilfsmittel werden auf Metalleffektpigmente, die mit anorganischen Oxidschichten oder organischen Polymerschichen versehen sind, als separate Schicht aufgebracht. Die Orientierungshilfsmittel verändern die Oberflächeneigenschaften des Metalleffektpigmentes und ermöglichen eine kovalente Anbindung an das Bindemittel des Lackes, wodurch zum einen die Orientierung der Pigmente im Lack und zum anderen die Schwitzwasserbeständigkeit des gehärteten Lackes verbessert wird.

Die DE 196 35 085 A1 offenbart mit einer passivierenden Schutzschicht belegte Aluminiumpigmente, die durch Physical Vapour Deposition (PVD) hergestellt sind. Eine Schutzschicht aus kovalent miteinander verbundenen anorganischen Oxiden und organischen Oligomeren und/oder Polymeren ist nicht beschrieben.

In der DE 40 30 727 A1 sind kunstharzbeschichtete Metallpigmente, die an ihrer Oberfläche zunächst eine kovalent gebundene Siloxanschicht aufweisen, an der ein dreidimensional vernetzter Kunstharzüberzug kovalent gebunden ist. Diese Pigmente sind nachteiligerweise nicht sehr korrosionsstabil. Auch bewirkt diese Siloxanschicht keine gute mechanische Anbindung des Kunstharzüberzuges an den Metallpigmenten.

Die EP 1 322 714 A2 offenbart eine Pigmentpräparation, die mit einer Silicium-Sauerstoffmatrix beschichtete Metallpigmente enthält. Hierunter sind reine SiO₂-Beschichtungen sowie Beschichtungen mit einer SiO₂-Matrix, in die organofunktionelle Silane eingebunden sind, zu verstehen.

Die WO 03/014228 A1 offenbart Metallpigmente, die mit einer ersten Schicht aus Phosphaten oder Boraten und einer zweiten Schicht aus SiO₂ beschichtet sind.

Gemäß der Lehre dieser Schrift kann die SiO₂-Schicht auch organofunktionelle Silane enthalten.

Ein Nachteil von Metalleffektpigmenten mit rein anorganischer Beschichtung bzw. von anorganischen Schichten, in die Organosilane eingebunden sind, ist, dass diese Schichten sehr spröde sind. Es hat sich herausgestellt, daß bei starker mechanischer Beanspruchung diese Schichten beschädigt werden können, was zu einem Verlust von gewünschten Eigenschaften führt.

So kann beispielsweise eine Verarbeitung von mit Silikat beschichteten Metalleffektpigmenten in einem Mischer dazu führen, daß die Gasungsstabilität der Pigmente nicht mehr gegeben ist. Die Pigmente werden dabei beispielsweise in dem Mischer als Pulver mit Lösungsmittel angepastet. Diese Pasten besitzen extrem hohe Viskositäten. Dadurch wirken aufgrund der mechanischen Scherenergie der Mischerschaufeln starke Scherkräfte auf die Metalleffektpigmente ein. Die spröden SiO₂-Schichten können durch die einwirkenden Scherkräfte mechanisch aufgebrochen werden. So reicht unter Umständen die Verletzung der Beschichtung nur eines winzigen Bruchteils der Plättchen aus, um zu einer Reaktion mit umgebenden Wassermolekülen zu führen, was zum einen ein Explosionsriskio nach sich zieht und zum anderen zu einer Verschlechterung der optischen Eigenschaften aufgrund von Korrosion führt, was unerwünscht ist. Eine Verarbeitung in einem Mischer stellt jedoch für die Produktion von Metalleffektpigmenten in konstanter Qualität einen unabdingbaren Herstellungsschritt dar.

Derartige Qualitätseinbußen sind selbst dann der Fall, wenn als Substrat ein mit Eisenoxid beschichtetes Aluminiumpigment ("Paliocrom") verwendet wird. Diese Pigmente können durch eine weitere SiO₂-Beschichtung sehr gasungsstabil gemacht werden. Hier liegen zwei aufeinander folgende anorganische Schichten vor, die jedoch beide spröde sind.

Das Problem der Sprödigkeit kann nicht einfach durch eine Erhöhung der Schichtdicke der SiO₂-Schicht, o. ä. gelöst werden, ohne signifikante Verschlechterungen anderer anwendungstechnischer Eigenschaften in Kauf nehmen zu müssen. Bei einer Erhöhung der Schichtdicke verschlechtert sich die Deckfähigkeit des Pigmentes und führt zu einer zunehmenden Verschlechterung der optischen Eigenschaften des Metallpigments. Auch eine zusätzliche organische Funktionalisierung der Oberfläche ändert nichts an der grundsätzlichen Sprödigkeit der SiO₂-Schicht.

Bei einer rein organischen Beschichtung von Metalleffektpigmenten ist nachteilig, daß diese nicht ausreichend gasungsstabil sind.

Aufgabe der vorliegenden Erfindung ist die Bereitstellung von Metalleffektpigmenten mit verbesserten mechanischen Eigenschaften. Die Metalleffektpigmente sollen auch nach dem Einwirken von starken Scherkräften gute optische Eigenschaften im Anwendungsmedium aufweisen sowie eine gute Gasungsstabilität besitzen.

Die der Erfindung zugrunde liegende Aufgabe wird durch Bereitstellung von Metalleffektpigmenten mit Beschichtung, umfassend ein plättchenförmiges Substrat, gelöst, wobei die Beschichtung wenigstens eine anorganisch/organische Mischschicht umfasst, wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente wenigstens teilweise ein organisches Oligomer und/oder Polymer ist, welches wenigstens teilweise mit dem anorganischen Netzwerk über einen oder mehrere organische Netzwerkbildner kovalent verbunden ist.

Bevorzugte Weiterbildungen sind in den Unteransprüchen 2-21 angegeben.

Die Aufgabe wird weiterhin durch Bereitstellung eines Verfahrens zur Herstellung von Metalleffektpigmenten mit anorganisch/organischer Mischschicht gelöst, wobei das Verfahren die folgenden Schritte umfasst:
- Umsetzen wenigstens eines anorganischen Netzwerkbildners und wenigstens eines organischen Netzwerkbildners und wenigstens einer reaktiven organischen Komponente in einer Flüssigphase unter Ausbildung einer Beschichtungszusammensetzung,
- Aufbringen der Beschichtungszusammensetzung auf plättchenförmige metallische Substrate als Mischschicht,
wobei die plättchenförmigen metallischen Substrate vor, während oder nach dem Zugeben oder Umsetzen des wenigstens einen anorganischen Netzwerkbildners und des wenigstens einen organischen Netzwerkbildners und der wenigstens einen reaktiven organischen Komponente zu der Flüssigphase zugegeben werden,
wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente wenigstens teilweise ein organisches Oligomer und/oder Polymer ist, welches wenigstens teilweise mit dem anorganischen Netzwerk kovalent verbunden ist.

Der wenigstens eine anorganische Netzwerkbildner, der wenigstens eine organische Netzwerkbildner und die wenigstens eine reaktive organische Komponente können in beliebiger Reihenfolge miteinander vermengt werden. Die Reaktionsbedingungen sind jedoch so einzustellen, dass eine Umsetzung zwischen den Komponenten erfolgen kann. Vorzugsweise erfolgt die Umsetzung durch Hydrolyse und/oder Kondensation der Komponenten untereinander. Die Komponenten sind mithin hydrolysierbar und/oder kondensierbar. Die sich bei der Hydrolyse und/oder Kondensation bildende Beschichtungszusammensetzung wird dann auf die Metallpigmentoberfläche, vorzugsweise durch Fällung, aufgebracht.

Die Metallpigmente können vor, während oder nach dem Zugeben oder Umsetzen des wenigstens einen anorganischen Netzwerkbildners und des wenigstens einen organischen Netzwerkbildners und der wenigstens einen reaktiven organischen Komponente zu der Flüssigphase zugegeben werden. Somit können die Metallpigmente zunächst in einer Flüssigphase vorgelegt und nachfolgend der oder die anorganischen Netzwerbildner, der oder die organischen Netzwerkbildner sowie die reaktive(n) organische(n) Komponente(n) in beliebiger Reihenfolge zugegeben werden. Die Metallpigmente können aber auch während der Umsetzung oder nach der Umsetzung zu der Beschichtungszusammensetzung zugegeben werden. In Abhängigkeit von der Reihenfolge der Zugabe und den angelegten Reaktionsbedingungen kann auf der Metallpigmentoberfläche zunächst eine überwiegend anorganische oder überwiegend organische Schicht aufgebracht werden, bevor die anorganisch/organische Mischschicht aufgebracht wird. Die anorganisch/organische Schicht kann selbstverständlich auch direkt auf die unbeschichtete oder vorbeschichtete Metallopigmentoberfläche aufgebracht werden.

Gemäß einer bevorzugten Weiterbildung umfasst das erfindungsgemäße Verfahren folgende Schritte:
(a) Bereitstellen einer Reaktionsmischung von plättchenförmigen metallischen Substraten in einer Flüssigphase,
(b1) Zugeben wenigstens eines anorganischen Netzwerkbildners zu der Reaktionsmischung von Schritt (a),
(c1) Hydrolysieren und/oder Kondensieren des in Schritt (b1) zugegebenen anorganischen Netzwerkbildners,
(d1) Zugeben wenigstens eines reaktiven organischen Netzwerkbildners und wenigstens einer reaktiven organischen Komponente vor, während und/oder nach der Hydrolyse und/oder Kondensation von Schritt (c1),
   oder
(b2) Zugeben wenigstens eines reaktiven organischen Netzwerkbildners und wenigstens einer reaktiven organischen Komponente zu der Reaktionsmischung von Schritt (a),
(c2) Zugeben wenigstens eines hydrolysierbaren und/oder kondensierbaren anorganischen Netzwerkbildners zu der Reaktionsmischung von Schritt (b2),
(d2) Hydrolysieren und/oder Kondensieren des in Schritt (c2) zugegebenen anorganischen Netzwerkbildners,
   und
(e) Umsetzen von hydrolysiertem und/oder kondensiertem anorganischen Netzwerkbildner mit dem reaktiven organischen Netzwerkbildner sowie der reaktiven organischen Komponente unter gleichzeitigem und/oder nachfolgendem Abscheiden einer anorganisch/organischen Mischschicht,
(f) optional Abtrennen der in Schritt (e) beschichteten plättchenförmigen Substrate von der Reaktionsmischung.

In den Unteransprüchen 23 - 45 sind bevorzugte Weiterbildungen des erfindungsgemäßen Verfahrens angegeben.

Unter anorganischem Netzwerkbildner wird im Sinne der Erfindung verstanden, daß der anorganische Netzwerkbildner ein anorganisches Netzwerk aufbauen kann. Eine anorganischer Netzwerkbildner kann beispielsweise ein hydrolysierbares Metallsalz oder auch eine vollständig hydrolysierbare metallorganische Verbindung sein.

Unter einem organischen Netzwerkbildner wird im Sinne der Erfindung verstanden, daß der organische Netzwerkbildner in Verbindung mit einer reaktiven organischen Komponente ein organisches oder metallorganisches Netzwerk aufbauen kann. Ein organischer Netzwerkbildner ist vorzugsweise eine metallorganische Verbindung, die nur teilweise hydrolysierbar ist und mithin keine anorganisches Netzwerk aufbauen kann.

Die der Erfindung zugrundeliegende Aufgabe wird auch durch die Verwendung des plättchenförmigen Metalleffektpigmentes nach einem der Ansprüche 1 bis 21 in Lacken, Automobillacken, Farben, Druckfarben, Pulverlacken, Bautenanstrichen, Kunststoffen, Sicherheitsdruckfarben, Keramiken, Glas oder kosmetischen Zubereitungen gelöst.

Die der Erfindung zugrundeliegende Aufgabe wird ferner durch die Verwendung des plättchenförmigen Metalleffektpigmentes nach einem der Ansprüche 1 bis 21 als IR (Infrarotlicht)-reflektierende Pigmente in Fassaden- und/oder Bautenanstrichen gelöst.

Es hat sich überraschend gezeigt, daß gasungsstabile sowie mechanisch stabile Metalleffektpigmente erhalten werden können, wenn die Metalleffektpigmente mit einer Mischschicht aus organischen Oligomeren und/oder Polymeren sowie einem anorganischen Netzwerk aus anorganischen Oxiden umhüllt werden. Die organischen Oligomere und/oder Polymere sind mit dem anorganischen Netzwerk wenigstens teilweise kovalent verbunden. Vorzugsweise wird das anorganische Netzwerk von den wenigstens teilweise kovalent gebundenen organischen Oligomeren und/oder Polymeren durchdrungen. Im Sinne der Erfindung bilden sich mithin nicht voneinander getrennte Schichten aus anorganischen Oxiden und organischen Oligomeren und/oder Polymeren aus. Vorzugsweise bildet sich eine Schicht aus, in der das anorganische Netzwerk und die organischen Oligomeren und/oder Polymeren sich gegenseitig durchdringen.

Überraschenderweise weisen die Mischschichten der erfindungsgemäßen Metalleffektpigmente eine mechanische Härte auf, die mit denen reiner anorganischer Oxidschichten vergleichbar ist. Im Unterschied zu reinen anorganischen Oxidschichten sind die anorganisch/organischen Mischschichten der erfindungsgemäßen Metalleffektpigmente wesentlich elastischer, d.h. wesentlich weniger spröde. Die erfindungsgemäßen Metalleffektpigmente sind mithin wesentlich einfacher zu handhaben, da diese gegenüber mechanischen Einwirkungen, beispielsweise Scherkräften, wesentlich unempfindlicher sind. Die verbesserte mechanische Stabilität wird überraschenderweise erreicht, ohne daß es zu einer Verschlechterung bei der Gasungsstabilität kommt.

Es hat sich beispielsweise gezeigt, daß nach Aufbringung einer Mischschicht aus SiO₂ und organischem Oligomer und/oder Polymer auf Metalleffektpigmenten gasungsstabile Pigmente erhalten werden, die auch nach einer Verarbeitung in einem Mischer noch gasungsstabil sind. Die organischen Oligomere und/oder Polymere sind dabei wenigstens teilweise mit der SiO₂-Schicht kovalent verknüpft. Die organische Komponente steigert die Elastizität der Beschichtung ohne wesentliche Beeinträchtigung der mechanischen Härte. Daraus resultiert eine im Vergleich zu rein anorganischen Schichten deutlich verbesserte Abrasionsstabilität der Beschichtung.

Weiterhin zeigte sich überraschenderweise, daß die Verbesserung der mechanischen Stabilität durch eine anorganisch/organische Mischschicht auch dann gegeben ist, wenn auf dieser Mischschicht noch eine (oder mehrere) weitere rein anorganischen Oxidschichten abgeschieden werden.

Des weiteren ist überraschend, daß bei einer anorganisch/organischen Mischschicht die Möglichkeit besteht, sogar einen verbesserten Korrosionsschutz von Metalleffektpigmenten im Vergleich zu reinen anorganischen oder organischen Schichten zu erreichen.

Somit lassen sich durch den Einbau organischer Oligomere und/oder Polymere in anorganische Oxidschichten anwendungstechnische Eigenschaften von Metalleffektpigmenten in vielfältigster Weise verbessern.

Erfindungsgemäß erfolgt die wenigstens teilweise kovalente Verbindung des anorganischen Oxidnetzwerkes mit dem organischen Oligomer und/oder Polymer über wenigstes einen organischen Netzwerkbildner. Hierbei handelt es sich um Reagenzien, die sowohl an das anorganische Netzwerk als auch an das organische Oligomer und/oder Polymer anbinden können.

Gemäß einer bevorzugten Ausführungsform erfolgt die wenigstens teilweise kovalente Bindung von anorganischer Oxidkomponente und organischem Oligomer und/oder Polymer wenigstens teilweise durch einen oder mehrere organische Netzwerkbildner, wobei der organische Netzwerkbildner vorzugsweise die allgemeine Formel (I)

R¹ₙR²ₘR³ₒSiX₍₄₋ₙ₋ₘ₋ₒ₎ (I)

aufweist, wobei X für eine hydrolysierbare Gruppe, nach deren Hydrolyse eine kovalente Bindung von organischem Netzwerkbildner mit dem anorganischen Netzwerk ausgebildet werden kann, steht
und R¹ für eine reaktive organische Gruppe steht, die mit dem organischen Oligomer und/oder Polymer kovalent verbindbar ist,
R² und R³ unabhängig voneinander jeweils für eine organische Gruppe stehen, die mit dem organischen Oligomer und/oder Polymer kovalent verbindbar sein können, mit der Maßgabe,
daß n, m und o ganze Zahlen sind, wobei n+m+o = 1-3 und n = 1 bis 3, m = 0 bis 2 und o = 0 bis 2 ist,
und/oder die allgemeine Formel (II)

(R¹O)ₙ(R²O)ₘ(R³O)ₒMX₍ₖ₋ₙ₋ₘ₋ₒ₎ (II)

aufweist, wobei die metallorganische Verbindung wenigstens eine hydrolysierbare Gruppe X, nach deren Hydrolyse eine kovalente Bindung von organischem Netzwerkbildner mit dem anorganischen Netzwerk ausgebildet werden kann, wenigstens einen organischen Rest R¹, der für eine reaktive organische Gruppe steht, die mit dem organischen Oligomer und/oder Polymer kovalent verbindbar ist, und R² und R³ unabhängig voneinander jeweils für eine organische Gruppe stehen können, die mit dem organischen Oligomer und/oder Polymer kovalent verbindbar sein können, wobei
k für die formale Oxidationszahl von M steht,
M für Al, Zr oder Ti steht,
n für eine ganze Zahl von 1 bis (k-1) steht,
m für eine ganze Zahl von 0 bis (k-2) steht,
o für für eine ganze Zahl von 0 bis (k-2) steht, und
wobei n+m+o eine ganze Zahl von 1 bis k-1 ist.

Unter formaler Oxidationszahl wird erfindungsgemäß verstanden, daß Aluminium die Oxidationszahl III, Zirkonium die Oxidationszahl II, III oder IV, und Titan die Oxidationszahl II, III oder IV haben kann. Vorzugsweise haben sowohl Zirkonium als auch Titan die Oxidationszahl IV.

Die reaktive Gruppe R¹ bzw. der reaktive organische Rest R¹ ist gemäß einer bevorzugten Weiterbildung der Erfindung polymerisierbar. Der Rest R¹ kann beispielsweise mit weiteren Resten R¹ polymerisierbar sein, so daß der organische Netzwerkbildner als solcher in einer oligomerisierten oder polymerisierten Form in der anorganisch/organischen Mischschicht vorliegen kann. Der Rest R¹ kann aber auch mit anderen Monomeren polymerisierbar sein, so daß der organische Netzwerkbildner in der anorganisch/organischen Mischschicht in einem auch aus weiteren Monomeren aufgebautem Polymer in einpolymerisierter Form vorliegen kann.

Als organische Netzwerkbildner sind besonders bevorzugt organofunktionelle Silane. Diese können nach der Hydrolyse der hydrolysierbaren Gruppe X an das anorganische Netzwerk anbinden. Durch die Hydrolyse wird die Gruppe X in der Regel durch eine OH-Gruppe ersetzt, die dann unter Kondensation mit OH-Gruppen des anorganischen Netzwerkes eine kovalente Bindung ausbildet. Dabei steht die Gruppe X vorzugsweise für Halogen, Hydroxy, Alkoxy mit 1-10 C-Atomen, welche geradkettig oder verzweigt sein können, in der Kohlenstoffkette aufweisen können, und Mischungen davon.

Der organische Netzwerkbildner bindet wenigstens über die funktionelle Gruppe R¹ mit oder an das organische Oligomer und/oder Polymer. R¹ ist vorzugsweise eine reaktive funktionelle Gruppe.

Der reaktive, vorzugsweise polymerisierbare, organische Rest R¹ weist vorzugsweise einen oder mehrere Substituenten auf, die aus der Gruppe ausgewählt werden ,die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamatgruppe und Mischungen davon besteht. Der organische Rest R¹ ist vorzugsweise über eine kovalente C-Si Bindung mit dem zentralen Siliziumatom verbunden.

Die Reste R² und R³ unabhängig voneinander aus der Gruppe, die aus H-, (C₁ - C₄₀)-Alkyl-, (C₁ - C₄₀)-fluorierte Alkyl-, (C₁ - C₄₀)-teilfluorierte Alkyl-; (C₂ - C₄₀)-Alkenyl-, (C₂ - C₄₀)-Alkinyl-; (C₆ - C₃₆)-Aryl-, fluorierte (C₆ - C₃₆)-Aryl-, teilfluorierte (C₆ - C₃₆)-Aryl-; (C₇ - C₄₀)-Alkylaryl-, (C₇ - C₄₀)-Arylalkyl-, fluorierte (C₇ - C₄₀)-Alkylaryl-, teilfluorierte (C₇ - C₄₀)-Alkylaryl-; (C₈ - C₄₀)-Alkenylaryl-, (C₈ - C₄₀)-Arylalkinyl-, -; (C₈ - C₄₀)-Alkinylaryl-; (C₅ - C₄₀)-Cycloalkyl-, (C₆ - C₄₀)-Alkylcycloalkyl-, (C₆ - C₄₀)-Cycloalkylalkylsilane, die jeweils mit Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamat- und/oder Estergruppe substituiert sein und in den Kohlenstoffketten und Kohlenstoffringsystemen O,N und S als Heteroatome enthalten können, besteht, ausgewählt werden. Vorzugsweise weisen die Reste R² und R³ Kettenlängen mit 3 bis 20 Kohlenstoffatomen, weiter bevorzugt mit 5 bis 18 Kohlenstoffatomen auf. Die Reste R² und R³ können dabei verzweigt und/oder linear sein. Im Falle von Alkylketten können diese von Hereroatomen wie O, S, oder N unterbrochen sein.

Die organische Gruppe bzw. der Rest R¹ weist jedenfalls eine Reaktivität auf, die eine kovalente Bindung des organischen Oligomers und/oder Polymers ermöglicht.

Die organischen Gruppen bzw. Reste R² und/oder R³ können auch eine Reaktivität aufweisen, die eine kovalente Bindung des organischen Oligomers und/oder Polymers ermöglicht. Im Unterschied zur organischen Gruppe R¹ bzw. dem Rest R¹ ist es jedoch nicht erforderlich, daß zwischen den Resten R² und/oder R³ eine kovalente Bindung zu dem organischen Oligomer und/oder Polymer ausgebildet wird. Insofern können die Reste R² und/oder R³ auch nicht-reaktiv sein. Insbesondere sind die Reste R² und R³ vorzugsweise unter den angelegten Reaktionsbedingungen nicht polymerisierbar. Somit ist bevorzugt, daß die Reste R² und R³ im Unterschied zu dem Rest R¹ nicht untereinander polymerisieren und, insbesondere unter den angelegten Reaktionsbedingungen, nicht mit Monomeren zu einem Polymer umgesetzt werden können.

Geeignete organofunktionelle Silane sind beispielsweise viele Vertreter der von der Fa. Degussa (Untere Kanalstrasse 3, D-79618 Rheinfelden) hergestellten und unter dem Handelsnamen "Dynasylan" vertriebenen Produkte. Beispielsweise können 3-Methacryloxypropyltrimethoxysilan (Dynasylan MEMO) zum Aufbau eines (Meth)acrylats oder Polyesters, Vinyltri(m)ethoxysilan (Dynasylan VTMO bzw. VTEO) zum Aufbau eines Vinylpolymeren, 3-Mercaptopropyltri(m)ethoxysilan (Dynasylan MTMO oder 3201) zum Einpolymerisieren in Kautschukpolymere, Aminopropyltrimethoxysilan (Dynasylan AMMO) oder N2-Aminoethyl-3-aminopropyltrimethoxysilan (Dynasylan DAMO) zum Aufbau eines β-Hydroxyamines oder 3-Glycidoxypropyltrimethoxysilan (Dynasylan GLYMO) zum Aufbau eines Urethan- oder Polyethernetzwerkes verwendet werden.

Weitere Beispiele für Silane mit Vinyl- bzw. (Meth)acrylatfunktionalitäten sind: Isocyanatotriethoxysilan, 3-Isocyanatopropoxyltriethoxysilan, Vinylethyldichlorsilan, Vinylmethyldichlorsilan, Vinylmethyldiacetoxysilan, Vinylmethyldiethoxysilan, Vinyltriacetoxysilan, Vinyltrichlorsilan, Phenylvinyldiethoxysilan, Phenylallyldiethoxysilan, Phenylallyldichlorsilan, 3-Methacryloxypropyltriethoxysilan, Methacryloxypropyltrimethoxysilan, 3-Acryloxypropyltrimethoxysilan, 2-Methacryloxyethyltri-(m)ethoxysilan, 2-Acryloxyethyltri(m)ethoxysilan, 3-Methacryloxypropyltris(methoxy-ethoxy)silan, 3-Methacryloxypropyltris(butoxyethoxy)silan, 3-Methacryloxypropyltris(propoxy)silan, 3-Methacryloxypropyltris(butoxy)silan.

Als organische Netzwerkbildner können auch geeignete organofunktionelle Titanate, Zirkonate oder Aluminate verwendet werden, wie sie beispielsweise von der Firma Kenrich Petrochemicals hergestellt und unter dem Handelsnamen Ken-React^{®} angeboten werden. (beziehbar bei der Fa. Nordmann, Rassmann GmbH, Kajen 2, 20459 Hamburg). Insbesondere die im KEN-REACT® Reference Manual Titanate, Zirconate and Aluminate Coupling Agents, 2. Überarbeitete Ausgabe, Sommer 1993, auf den Seiten 2 bis 21 angegebenen Kopplungsreagenzien können zum größten Teil als organische Netzwerkbildner verwendet werden. Die Offenbarung der Seiten 2 bis 21 des vorgenannten KEN-REACT® Reference Manuals wird hiermit unter Bezugnahme aufgenommen.

Diese organischen Netzwerkbildner weisen vorzugsweise als hydrolysierbare oder kondensierbare Gruppe X bevorzugt Alkoxy, jedoch auch Hydroxy oder Halogen auf. Im Fall von Alkoxy kann auch eine cyclische Gruppe, die über zwei Sauerstoffatome an das Zentralatom M gebunden ist, wie beispielsweise Oxoethylen oder Cycloneopentyl, vorliegen. Das Zentralatom M hat in diesem Fall nur noch zwei weitere Substituenten. Die hydrolysierbare Gruppe kann auch Bestandteil einer zyklischen Einheit, die über weitere Sauerstoffatome an das Zentralatom koordinativ gebunden sind, sein und somit nach Hydrolyse nicht vom Molekül abgespalten werden.

Bei weiteren Formen können zwei koordinativ an das Zentralatom gebundene Organophosphitoliganden vorliegen. In diesem Fall sind vier Alkoxyliganden an das Zentralatom gebunden.
Diese Al-, Zr- oder Ti-organischen Netzwerkbildner können in Form von Chelatkomplexen oder Koordinationskomplexen vorliegen. Die Liganden können dabei Heteroatome, vorzugsweise N, S oder O, enthalten.

Beispiele derartiger organischer Netzwerkbildner sind (siehe KEN-REACT® Reference Manual - Titanate, Zirconate and Aluminate Coupling Agents by Salvatore J. Monte):
Isopropyldimethacrylisostearoyltitanat(IV) (KR7), Alkoxytrimethacryltitanat (KR 33DS), Isopropyltri(N-ethylendiamino)ethyltitanat(IV) (KR 44), Tris(2-propenoato-0)methoxyglycolytotitanat (KR 39DS), Methacrylatotriisopropoxytitanat, Methacryloxyethylacetoacetonatotriisopropoxytitanat, (2-Methacryloxyethoxy)-triisopropoxytitanat, Titan(IV)2,2(bis 2propenolatomethyl)butanolatotris(dioctyl)pyrophosphato-0 (LICA 38J), Methacryloxyethylacetoacetonatotri-n-propoxyzirkonat, Neopentyl(diallyl)oxy-tri(N-ethylendiamino)ethylzirconat(IV) (NZ 44), 9-Octadecenylacetoacetatodiisopropoxyaluminat.

Die anorganische Komponente der Mischschicht besteht bevorzugt aus Metalloxid und/oder Metalloxidhydrat und/oder Metallsuboxid und/oder Metallhydroxid, was untereinander wenigstens teilweise ein zwei- oder dreidimensionales Netzwerk ausbildet.

Der anorganische Anteil der Mischschicht aus Metalloxid und/oder Metalloxidhydrat und/oder Metallsuboxid und/oder Metallhydroxid und/oder Metallperoxid wird vorzugsweise aus der Gruppe ausgewählt, die aus Silizium, Aluminium, Titan, Zirkonium, Cer, Chrom, Mangan, Antimon, Zink, Bor, Magnesium, Eisen und deren Mischungen und Legierungen besteht.

Als Ausgangsverbindungen, die als anorganische Netzwerkbildner wirken, dieser Oxide werden bevorzugt Alkoxide, Hydroxide und Halogenide dieser Metalle verwendet.

Vorzugsweise besitzen die anorganischen Netzwerkbildner die allgemeine Formel

MXₙ,

wobei X unabhängig voneinander eine ggf. hydrolysierbare und/oder kondensierbare Gruppe aus Halogen, Hydroxy oder Alkoxy mit 1-10 C-Atomen, wobei die Alkoxygruppe in der Kohlenstoffkette Heteroatome, vorzugsweise O, S und/oder N, in der Kohlenstoffkette aufweisen kann, ist.

Das Metall M steht vorzugsweise für Si, Al, Ti, Zr, B, Fe, Mg, Mn, Sb, Cr, Zn und/oder Ce steht, mit der Maßgabe, daß,
wenn M für Sb(V) steht,
n = 5 ist und,
wenn M für Si, Ti oder Zr steht,
n = 4 ist und,
wenn M für Al, Ce, Fe(III), Sb(III) oder B steht,
n = 3 ist und,
wenn M für Zn, Fe(II) oder Mg steht,
n = 2 ist.

Im Fall von M = Al, Ti, Zr, Fe kann X auch für chelatisierende Liganden wie beispielsweise Acetylacetonate oder Acetessigsäureester stehen.

Bevorzugt werden anorganische Netzwerkbildner verwendet, bei denen M für Si, Al, Ti und/oder Zr steht und X für Alkoxygruppen mit 1 bis 6 C-Atomen, wobei die Alkoxygruppe in der Kohlenstoffkette Heteroatome, vorzugsweise O, S und/oder N, in der Kohlenstoffkette aufweisen kann, steht. Besonders bevorzugt werden Tetraalkoxysilane, insbesonderer Tetramethoxy- und/oder Tetraethoxysilane, zum Aufbau einer SiO₂-Schich verwendet.

Metalleffektpigmente, insbesondere Aluminiumeffektpigmente, die mit einer Mischschicht aus SiO₂ und Acrylat und/oder Methacrylat, versehen sind, sind mechanisch sehr stabil und sehr gasungsstabil. Es hat sich gezeigt, daß diese Eigenschaften weiter verbessert werden können, wenn bei Erzeugung des anorganischen Netzwerks, beispielsweise durch Hydrolyse von Tetraethoxysilan, Acrylsilan und Acrylmonomer und/oder Methacrylmonomer zugegeben werden. Bei diesem Ansatz erfolgt zum einen eine Ankopplung von Acrylsilan an das sich ausbildende SiO₂-Netzwerkes und zum anderen eine Polymerisation von Acrylmonomer und/oder Methacrylamonomers sowie eine Einpolymerisation der Acrylgruppe des Acrylsilans in das sich aus Acrylmonomeren und/oder Methyacrylmonomeren aufbauende Acryloligomer und/oder -polymer und/oder Methacryloligomer und/oder -polymer.

Die Fällung von rein anorganischen Beschichtungen von Metalleffektpigmenten aus derartigen Metallausgangsverbindungen erfolgt üblicherweise bei spezifischen pH-Werten. Diese und weitere typische Reaktionsbedingungen, wieTemperatur oder Dauer sind dem Fachmann bekannt.

Wenn die Fällung des Metalloxids aus geeignetem anorganischen Netzwerkbildner auf dem plättchenförmigen Substrat in Gegenwart geeigneter Monomere und optional Polymerisationsstarter sowie organischen Netzwerkbildnern durchgeführt wird, so kann gleichzeitig gezielt ein anorganisches Oxidnetzwerk und ein organisches Oligomer und/oder Polymer gebildet werden. Das anorganische Netzwerk und die organischen Oligomere und/oder Polymere durchdringen sich vorzugsweise gegenseitig.
Bei einer bevorzugten Weiterbildung der Erfindung liegt sowohl ein anorganisches Netzwerk als auch ein organisches Netzwerk aus Oligomeren und/oder Polymeren vor, die sich vorzugsweise gegenseitig durchdringen.

In Abhängigkeit von den Reaktionsbedingungen, Mengenverhältnissen der eingesetzten Edukte und den Kinetiken der ablaufenden Reaktionen kann die anorganisch/organische Mischschicht im wesentlichen homogen ausgebildet sein. Es können aber auch kleine Bereiche aus anorganischem Netzwerk und/oder organischem Oligomer und/oder Polymer in der Mischschicht vorliegen.

Unter organischen Oligomeren in der Mischschicht wird in dieser Erfindung der in der Polymerchemie übliche Begriff verstanden: d.h. die Verknüpfung von zwei bis zwanzig Monomereinheiten (Hans-Georg Elias, "Makromoleküle" 4. Auflage 1981, Hüthig & Wepf Verlag Basel). Polymere sind Verknüpfungen ab mehr als zwanzig Monomereinheiten.

Aufgrund der Vielfalt organischer Monomere und der Verwendung verschiedener Metalloxide oder Metalloxidmischungen ist grundsätzlich ein weiter Bereich an Variationsmöglichkeiten einer anorganisch/organischen Mischschichtbildung möglich. Durch das Verhältnis von Monomerkonzentration zur Konzentration der organischen Netzwerkbildner ist die durchschnittliche Kettenlänge der organischen Segmente variierbar. So können Beschichtungen erzeugt werden, die den Metalleffektpigmenten in vielerlei Hinsicht maßgeschneiderte Eigenschaften verleihen. Die durchschnittliche Kettenlänge der organischen Segmente beträgt 2 bis 10.000, bevorzugt 10 bis 1.000 und besonders bevorzugt 40 bis 200 Monomereinheiten.

Das organische Oligomer und/oder Polymer in der Mischschicht kann durch Polymerisation geeigneter Monomere aufgebaut werden. Die Monomere können Funktionalitäten aufweisen, die aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-. Carbamat-, Estergruppe und Mischungen davon besteht, ausgewählt werden.

Bei einer bevorzugten Ausführungsform wird die anorganisch/organische Mischschicht unter Verwendung von organischen Netzwerkbildnern zur kovalenten Verknüpfung von anorganischem und organischen Netzwerken und durch Polymerisation von organischen Monomeren, durchgeführt. Besonders bevorzugt ist die Verwendung von (Meth)acrylatfunktionen-haltigen Silanen wie beispielsweise Dynasylan MEMO als organische Netzwerkbildner und von Methacrylaten als Monomeren.

Geeignet sind als Monomere oder reaktive Oligomere oder Polymere insbesondere vernetzende, d.h. mehrfunktionelle (Meth)acrylate. Beispiele für solche Verbindungen sind:

Tetraethylenglycoldiacrylat (TTEGDA), Triethylenglycoldiacrylat (TIEGDA), Polyethylenglycol-400-diacrylat (PEG400DA), 2,2'-Bis(4-acryloxyethoxyphenyl)-propan, Ethylenglycoldimethacrylat (EGDMA), Diethylenglycoldimethacrylat (DEGDMA), Triethylenglycoldimethacrylat (TRGDMA), Tetraethylenglycoldimethacrylat (TEGDMA), Butyldiglycolmethacrylat (BDGMA), Trimethylolpropantrimethacrylat (TMPTMA),1,3-Butandioldimethacrylat (1,3-BDDMA), 1,4-Butandioldimethacrylat (1,4-BDDMA), 1,6-Hexandioldimethacrylat (1,6-HDMA), 1,6-Hexandioldiacrylat (1,6-HDDA), 1,12-Dodecandioldimethacrylat (1,12-DDDMA), Neopentylglycoldimethacrylat (NPGDMA),

Besonders bevorzugt ist Trimethylolpropantrimethacrylat (TMPTMA).
Diese Verbindungen sind kommerziell erhältlich bei Elf Atochem Deutschland GmbH, D-40474 Düsseldorf Deutschland oder Rohm & Haas, In der Kron 4, 60489 Frankfurt / Main, Deutschland.

Nicht vernetzende (Meth)acrylate können auch als Monomere zum Aufbau der organischen Komponente, d.h. des organischen Oligomers und/oder Polymers, der Mischschicht verwendet werden. Abhängig von weiteren funktionellen Gruppen dieser (Meth)acrylate können wiederum vielfältigste Variationsmöglichkeiten der chemischen Zusammensetzung und damit auch der anwendungstechnischen Eigenschaften der mit einer Mischschicht versehenen Metalleffektpigmente ermöglicht werden. Geeignet sind auch Mischungen von vernetzenden und monofunktionellen Vinyl- und/oder (Meth)acrylatmonomeren.

Beispiele monofunktioneller (Meth)acrylate sind: Lauryl(meth)acrylat, Allyl(meth)-acrylat, Propyl(meth)acrylat, Isobornylmethacrylat und Hydroxyethylimidazolinmethacrylat.

Diese Verbindungen sind kommerziell ebenfalls erhältlich bei Elf Atochem Deutschland GmbH, Uerdingerstr. 4 D-40474 Düsseldorf oder bei Rohm & Haas, In der Kron 4, 60489 Frankfurt / Main, Deutschland

Die Polymerisation von Vinyl- und/oder (Meth)acrylat-funktionellen Monomeren beim Aufbau der anorganisch/organischen Mischschicht kann durch thermische Polymerisation erfolgen. Bevorzugt ist die Verwendung von Polymerisationsstartern, vorzugsweise von Radikalinitiatoren. Dabei handelt es sich um handelsübliche i.d.R. organische oder anorganische Peroxide oder Diazoniumverbindungen. Beispiele solcher Verbindungen sind:

Acetyl-cyclohexan-sulfonylperoxid, Bis(2,4-dichlorbenzoyl)peroxid, Diisononanylperoxid, Dioctanoylperoxid, Diacetyl- und Dibenzoylperoxid; Peroxidicarbonate (z.B. Diisopropyl-peroxydicarbonat, Di-n-butylperoxydicarbonat, Di-2-ethylhexyl-peroxydicarbonat, Dicyclohexyl-peroxydicarbonat), Alkylperester (z.B. Cumylperneodecanoat, t-Butyl-perneodecanoat, t-Amyl-perpivalat, t-Butyl-per-2-ethylhexanoat, t-Butylperisobutyrat, t-Butylperbenzoat), Dialkylperoxide (z.B. Dicumylperoxid, t-Butylcumylperoxid, 2,5-Dimethylhexan-2,5-di-t-butylperoxid, Di(t-butylperoxyisopropyl)benzol, Di-t-butyl-peroxid, oder 2,5-Dimethylhexin-3-2,5-di-t-butylperoxid), Perketale (z.B. 1,1'-Bis-(t-butylperoxy)-3,3,5-trimethylcyclohexanonperoxid, Methylisobutylketonperoxid, Methyl-ethylketonperoxid, Acetylacetonperoxid), Alkylhydroperoxide (z.B. Pinanhydroperoxid, Cumolhydroperoxid, 2,5-Dimethylhexan-2,5-dihydroperoxid oder t-Butylhydroperoxid), Azoverbindungen (z.B. 4-4'-Azo-bis(4-cyanvaleriansäure), 1,1'-Azo-bis(cyclohexan-carbonsäurenitril), 1,1'-Azo-bis(isobutyrosäureamidin)dihydrochlorid, 2,2'-Azo-bis(iso-butyronitril) oder Persulfate wie Natriumperoxodisulfat und Kaliumperoxodisulfat. Bevorzugt ist 2,2'-Azo-bis(isobutyronitril).

Diese Verbindungen sind kommerziell erhältlich bei Aldrich Chemie, D-89552, Steinheim.

Weiterhin kann die Polymerisation von Vinyl- und/oder (Meth)acrylat-funktionellen Monomeren beim Aufbau der anorganisch/organischen Mischschicht auch durch eine ATRP (atomic-transfer-radical-polymerisation), der sogenannte Lebendradikalischen Polymerisation durchgeführt werden. Hier wird als organischer Netzwerkbildner bevorzugt eine Silanverbindung, bei der R¹ endständig mit einem Alkylhalogenid, bevorzugt einem Alkylbromid mit α-ständiger Estergruppe, versehen ist, verwendet. Ferner werden hierbei Cu(I)-Salze, optional in Mischung mit Cu(II)-salzen oder metallischem Cu, sowie geeignete die Kupferverbindungen komplexierende Liganden zugesetzt. Nähere Einzelheiten hierzu finden sich in der DE 198 38 241 A1.

Bei Verwendung von Epoxysilanen als organische Netzwerkbildner können diese mit mehrfach funktionellen Aminen als Vernetzer umgesetzt werden. Weitere Variationsmöglichkeiten erhält man zusätzlich noch bei Verwendung von mehrfach funktionellen Epoxyverbindungen. Kombinationen mehrfach funktioneller Epoxyverbindungen und mehrfach funktioneller Aminoverbindungen können selbstverständlich auch bei Verwendung von aminofunktionellen Silanen als Kupplungsreagenzien eingesetzt werden.

Zu solchen Reaktionen geeignete und kommerziell erhältliche mehrfach funktionelle Amine sind z.B.: 3,3-Dimethyl-4,4-diaminodicyclohexylmethan, Ethylendiamin, Triethylentetramin, meta-Xylylendiamin, N-Aminoethylpiperazin, 2-Methyl-1,5-pentamethylendiamin, 1,2-Diaminocyclohexan oder Isophorondiamin.

Geeignete kommerziell erhältliche mehrfach funktionelle Epoxyverbindungen sind z.B.: 1,4-Butandioldiglycidether, Glycerintriglycidether, Neopentylglykoldiglycidether, Pentaerythritpolyglycidether, 1,6-Hexandioldiglycidether, Polypropylenglykoldiglycidether oder Trimethylolpropantriglycidether.
Diese mehrfach funktionellen Amine und Epoxyverbindungen sind kommerziell erhältlich bei der Firma UPPC: (U. Prümmer Polymer-Chemie GmbH; Mühlhalde 8 in D-88487 Baltringen).

Bei einer weiteren erfindungsgemäßen Ausführungsform wird das organische Netzwerk nicht während der Reaktion hergestellt. Stattdessen verwendet man als organische Komponente reaktive organische Oligomere und/oder Polymere, welche über reaktionsfähige Gruppen verfügen, die eine Anbindung an das Oxidnetzwerk über die mindestens eine Gruppe R¹ der organischen Netzwerkbildner ermöglichen. Um eine effektive Reaktion mit insbesondere der Gruppe R¹ der organischen Netzwerkbildner zu gewährleisten, kann das Oligomer und/oder Polymer vor dem Einbau in die Mischschicht auch direkt mit dem organischen Netzwerkbildner umgesetzt werden. Hierzu werden die Oligomere und/oder Polymere in einem geeigneten Lösungsmittel gelöst, mit organischen Netzwerkbildnern versetzt und zur Reaktion gebracht. Die mit dem organischen Netzwerkbildner gekoppelten organischen Oligomere und/oder Polymere können dann mit den zur Erzeugung des anorganischen Netzwerkes verwendeten Metalloxid-bildenden Verbindungen unter Ausbildung der anorganisch/organischen Mischschicht umgesetzt werden.

Reaktive organische Oligomere und/oder Polymere, die direkt in das sich bildendes anorganische Netzwerk während der Reaktion eingebaut werden können, sind beispielsweise: mit Silanol- oder Methoxygruppen terminierte Silicone, silanmodifizierte Polyethylenimine oder Polybutadiene, Polyarylalkylsilsesquioxane oder mit Aminosilan modifizierte Polyethylenoxidurethane. Bei diesen Verbindungen sind besonders niedrige Molekulargewichte aus einem Bereich von 100 bis 1000 g/mol bevorzugt. Niedermolekulare Verbindungen dieses Typs weisen über besonders viele Verknüpfungsstellen zum anorganischen Oxidnetzwerk auf und ergeben damit homogener verteilte anorganisch/organische Mischschichten.

Beispiele für solche kommerziell erhältliche Verbindungen sind:
reaktive Silikone wie 1,7-Dichlorooctamethyltetrasiloxan, Silanolgruppen terminierte Diphenylsiloxane, Silanol- bzw. Methoxygruppen terminierte Dimethyl- und Diphenylsiloxancopolymere, Silanolgruppen terminierte Polytrifluoropropylmethylsiloxan, Trimethoxysilylpropyl- substituiertes Polyethylenimin, Dimethoxymethylsilylpropyl- substituiertes Polyethylenimin, Triethoxysilyl- modifiziertes Polybutadiene, Dimethoxymethylsilyl- modifiziertes Polybutadiene, Vinylmethoxysiloxan Oligomer, (N-Triethoxysilylpropyl)O-Polyethylenoxidurethan und Poly(trimethysilylpropin) (alle zu beziehen über z.B. ABCR GmbH & Co. Postfach 210135, Hansastr. 29c, D-76151 Karlsruhe. Deutschland). Ein weiteres Beispiel sind mit Silanen modifizierte Phenolformaldehydoligomere, wie sie als Resole oder Novolacke von der Bakelite AG (Gennaer Straße2-4, D-58642 Iserlohn-Letmathe) hergestellt und vertrieben werden.

Bei einer weiteren erfindungsgemäßen Ausführungsform können als reaktive Oligomere und/oder Polymere auch Verbindungen eingesetzt werden, die über reaktive, vorzugsweise polymerisierbare, funktionelle Gruppen verfügen. Die polymersierbaren funktionellen Gruppen können beispielsweise durch eine nachträgliche Reaktion des Oligomeren und/oder Polymeren (beispielsweise durch eine Polymer-analoge Umsetzung) hergestellt werden. Diese reaktiven Oligomere/Polymere reagieren mit den funktionellen organischen Gruppen geeigneter organischer Netzwerkbildner und werden somit an das bzw. in dem anorganische(n) Oxidnetzwerk kovalent gebunden.

Bei diesen reaktiven Oligomeren und/oder Polymeren kann es sich um Reaktivpolymere aus der Gruppe der Polyacrylate, Polymethacrylate, Polyether, Polyester, Polyamine, Polyamide, Polyole, Polyurethane und Polyolefine handeln.

Organische Oligomere und/oder Polymere, die über geeignete funktionelle Gruppen direkt in die Mischschicht eingebaut werden können, sind bevorzugt solche, die über polymerchemisch kompatible funktionelle Gruppen verfügen wie die organischen Netzwerkbildner. So wird im Fall eines Epoxygruppen enthaltenden Silans vorzugsweise ein Epoxidharz oder ein Aminogruppe-haltiges Harz eingesetzt, im Fall von (meth)acrylgruppenhaltigen Silanen werden vorzugsweise (Meth)acrylate eingesetzt usw.. Erfolgt die Umsetzung der funktionellen Gruppen der organischen Oligomer/Polymere mit den reaktiven Gruppen R¹ der organischen Netzwerkbildner über Kondensations- oder Additionsmechanismen, so sind die funktionellen Gruppen vorzugsweise entsprechend aufeinander abgestimmt. Beispielsweise können epoxidhaltige Polymere insbesondere gut mit Epoxy- oder Aminofunktionalisierten Silanen umgesetzt werden. Auf diese Weise werden die Polymere durch Alkoxysilane modifiziert und sind damit sehr gut zusammen mit beispielsweise Tetraalkoxysilanen zu anorganisch/organischen Mischschichten umsetzbar.

Ein Beispiel für ein derart verwendbares Präpolymer/Präoligomer ist das Epoxidharz D.E.R: 330 (Dow Corning; Rheingaustr. 53 in D-65201 Wiesbaden, Deutschland). Weitere Beispiele sind Epoxycyclohexylethyl)methylsiloxan-Dimethylsiloxan-copolymer, Aminopropylmethylsiloxan-Dimethylsiloxan-copolymer von ABCR, sowie Polybutadien-poly(2,3-epoxy)butadien-copolymer (erhältlich von Aldrich, D-89552 Steinheim, Deutschland).

Bei einer weiteren Ausgestaltung der Erfindung erfolgt die organische Oligomer-und/oder Polymerbildung innerhalb eines anorganischen Oxids, indem man lediglich die funktionellen Gruppen der organischen Netzwerkbildner untereinander polymerisieren läßt. So können beispielsweise organische Netzwerkbildner, bei denen die reaktive, vorzugsweise polymerisierbare, Gruppe R¹ vorzugsweise Methacrylat-, Acrylat- oder Vinylgruppen sind, durch Zugabe geeigneter Polymerisationsinitiatoren polymerisiert bzw. oligomerisiert werden. Auch können beispielsweise epoxidhaltige Silane vor dem Einbau in ein Oxidnetzwerk untereinander zu oligomeren/polymeren Polyethereinheiten reagieren.
Eine Mischung geeigneter epoxy- und aminofunktionalisierter Silane kann vor dem Einbau in die anorganisch/organische Mischschicht wenigstens teilweise unter Bildung von oligomeren/polymeren β-Hydroxyaminen reagieren und dadurch bereits ein quasi zweidimensionales organisches Netzwerk ausbilden. Diese Silangemische können dann mit dem entstehenden Oxidnetzwerk unter Bildung einer anorganisch/organischen Mischschicht umgesetzt werden. Derartig gebildete anorganisch/organische Mischschichten können jedoch einen geringeren Polymerisationsgrad bei der organischen Komponente aufweisen, als wenn zusätzlich organische Monomere einpolymerisiert, d.h. bei der Polymerisation zusätzlich zugesetzt werden.

Bevorzugt ist daher bei einer weiteren Ausführungsform der Erfindung die zusätzliche Verwendung organischer Monomere zum Aufbau des organischen Netzwerkes.

Um sowohl die vorteilhaften Wirkungen des organischen Oligomers und/oder Polymers als auch des anorganischen Oxidnetzwerkes zuverlässig nutzen zu können, liegt der organische Anteil in der auf einem plättchenförmigen Substrat aufgebrachten anorganisch/organischen Mischschicht vorzugsweise in einem Bereich von 4 bis 85 Gew.-%, bevorzugt 5 bis 75 Gew.-% und besonders bevorzugt 10 bis 50 Gew.-%, wobei sich die Angabe Gew.-% auf das Gewicht der gesamten Mischschicht bezieht.

Unterhalb von 4 Gew.-% der organischen Komponente sind die vorteilhaften, d.h. elastizitätsverbessernden Wirkungen des organischen Oligomers und/oder Polymers kaum wirksam. Auf der anderen Seite gehen oberhalb von 85 Gew.-% an organischem Anteil in der Mischschicht die vorteilhaften, d.h. die Abriebsbeständigkeit verbessernden Wirkungen der anorganischen Komponente verloren.

Analytisch auf einfache Weise bestimmbar sind diese Gehalte der organischen Komponenten anhand des C-Gehaltes des Effektpigmentes.

Bei komplexen Schichtaufbauten mit weiteren rein organischen oder anorganischen Schichten empfehlen sich zur Analyse derartiger Schichten Sputtertechniken in Kombination mit oberflächensensitiven analytischen Methoden wie ESCA und/oder SIMS.

Um die vorteilhaften Wirkungen der anorganisch/organischen Mischschicht im Sinne einer mechanischen Stabilisierung und/oder verstärkter Hydrophobierung zu entfalten, beträgt die mittlere Dicke der Mischschicht vorzugsweise mindestens 2 nm, bevorzugt mindestens 3 nm und besonders bevorzugt mindestens 10 nm. Unterhalb von 2 nm sind die vorteilhaften Wirkungen der anorganischen/organischen Mischschicht kaum mehr wahrzunehmen.

Die mechanische Stabilisierung der anorganisch/organischen Mischschicht ist auch noch bei sehr hohen Schichtdicken gegeben. Üblicherweise liegt die Schichtdicke der anorganisch/organischen Mischschicht in einem Bereich von etwa 10 nm bis 50 nm. Die vorteilhaften Wirkungen sind jedoch auch noch bei maximalen Schichtdicke von 800 nm, bevorzugt 700 nm und ganz besonders bevorzugt 600 nm vorhanden. Schichtdicken oberhalb dieser Bereiche erhöhen insgesamt die Dicke der Metalleffektpigmente zu sehr. In diesem Fall ist die Orientierungsfähigkeit der Metalleffektpigmente im Anwendungsmedium, die für die optische Effektbildung wesentlich ist, immer stärker eingeschränkt. Darüber hinaus wird das Deckungsvermögen der Pigmente bei sehr dicken Beschichtungen beeinträchtigt.

Die beiden Komponenten der anorganisch/organischen Mischschicht können über die Dicke der Schicht gesehen sowohl homogen verteilt vorliegen als auch inhomogen wie beispielsweise in Form einer Gradientenverteilung, so daß sich das Mischungsverhältnis der beiden Komponenten entlang der Schichtdicke sich ändert. Die oben angegebenen Begrenzungen der Zusammensetzung der Mischschicht gelten im Fall einer inhomogenen Verteilung der einzelnen Komponenten für den Mittelwert entlang der Dicke der Mischschicht. Erfindungsgemäß wird jedoch eine im wesentlichen homogene, bevorzugt homogene, Verteilung von anorganischem Netzwerk und organischem Oligomer und/oder Polymer bevorzugt.

Die organischen Oligomere und/oder Polymere können beispielsweise auch zumindest teilweise in Form von Nanopartikeln in dem anorganischen Netzwerk unter Ausbildung der anorganisch/organischen Mischschicht vorliegen. Es ist aber auch möglich, daß die anorganische Oxidkomponente zumindest teilweise in Form von Nanopartikeln in dem organischen Oligomer und/oder Polymer unter Ausbildung der anorganisch/organischen Mischschicht vorliegen. Gemäß einer weiteren Variante der Erfindung weist die anorganisch/organische Mischschicht im nanoskaligen Bereich einen im wesentlichen homogenen Aufbau auf, so daß die Ausbildung von anorganischen Nanopartikeln in im wesentlichen organischer Umgebung aus Oligomer und/oder Polymer bzw. von organischen Nanopartikeln in Form von Oligomer und/oder Polymer in anorganischer Umgebung weniger häufig vorkommt. Ein homogener Aufbau wird insbesondere bei Verwendung eines hohen Anteils an organischen Netzwerbildnern bei Erzeugung der anorganisch/organischen Mischschicht erhalten.

Das plättchenförmige Substrat besteht generell aus kommerziell erhältlichen Metalleffektpigmenten. Diese umfassen reine Metallpigmente, beschichtete Metallpigmente sowie Metalle enthaltende Interferenzpigmente.

Plättchenförmig sind die Substrate, die einen Formfaktor (Verhältnis des Mittelwertes der Längsausdehnung zur mittleren Dicke) von 3 bis 10.000, bevorzugt von 5 bis 5.000 und ganz besonders bevorzugt von 10 bis 4.500 haben.
Die Größenverhältnisse der plättchenförmigen Substrate werden charakterisiert durch den Mittelwert (d₅₀-Wert) der Summenverteilungskurve, wie sie üblicherweise mit Laserbeugungsmethoden gemessen werden. Hierbei sind bevorzugt Größen, d.h. Längsausdehnungen mit einem d₅₀ von 2 bis 2.000 µm, besonders bevorzugt von 3 bis 1.000 µm, weiter bevorzugt von 4 bis 200 µm und ganz besonders bevorzugt von 5 bis 100 µm.

Die Metalleffektpigmente besteht aus Materialien wie Aluminium, Kupfer, Eisen, Zink, Zinn, Titan, Chrom, Silber, Kobalt, Nickel, Antimon, Magnesium, Zirkonium und Silizium sowie deren Legierungen. Bevorzugte Legierungen sind Goldbronzen (Messing), und weiterhin sind ebenfalls Stahl und Edelstahlpigmente verwendbar. Im Fall reiner Metalle, d.h. von Metallen mit einem Reinstanteil > 98 Gew.-%, sind Aluminium, Kupfer und Eisen bevorzugt.

Besonders bevorzugt sind plättchenförmige Substrate aus Aluminium, Messing (Goldbronzen) sowie aus (reduziertem) Carbonyleisengrieß hergestellte Eisenpigmente, wie sie gemäß der Lehre der DE 101 14 446 A1 beschrieben sind.

Diese Substrate besitzen Längsausdehnungen von 1 bis 1000 µm, bevorzugt von 5 bis 100 µm. Die mittleren Dicken liegen bei 30 bis 2.000 nm, bevorzugt bei 70 bis 800 nm und besonders bevorzugt bei 150 bis 500 nm. Sehr dünne, durch Naßmahlverfahren hergestellte Aluminiumpigmente sind beispielsweise in der DE 103 15 755 A1 beschrieben, die hiermit unter Bezugnahme aufgenommen ist.

Die Metallpigmente können sowohl durch konventionelle Technologien wie die Naß-oder Trockenvermahlung entsprechender Metallgrieße hergestellt werden als auch durch PVD (Physical Vapor Deposition) Bandbeschichtungsverfahren, wie sie beispielsweise in der US 4,321,087 beschrieben sind. Im letzteren Fall kann das Metallpigment, nachdem es vom Band gelöst und mechanisch zu Pigmenten zerkleinert wurde, mit einer anorganisch/organischen Mischschicht versehen werden. Auf diese Weise können diese Pigmente mechanisch stabilisiert sowie vor korrosiven Einflüssen geschützt werden.

Weiterhin kommen als plättchenförmiges Substrat beschichtete Metallpigmente in Betracht. Hierbei sind beispielsweise mit Eisenoxid beschichtete Aluminiumpigmente (Handelsname: "Paliocrom^{®}", Fa BASF, Ludwigshafen, Deutschland), chromatierte Aluminiumpigmente (Handelsname: "Hydrolux", Fa. Eckart), oxidierte Aluminiumpigmente (Handelsname: "Aloxal", Fa. Eckart), mit Titanoxid beschichtete Aluminiumpigmente sowie mit Oxidschichten versehene Eisenpigmente [DE 101 14 445 A1] zu nennen.

Besonders bevorzugt sind mit Eisenoxid beschichtete Aluminiumpigmente (Handelsname: "Paliocrom^{®}"). Hier handelt es sich um Metallpigmente, die mit einer rein anorganischen Eisenoxidschicht beschichtet sind.

Höchst bewitterungsstabile Pigmente erhält man durch Verwendung chromatierter Aluminiumpigmente als Substrat. Diese Pigmente können im Fassadenbau als IR-reflektierende Pigmente verwendet werden. Hierbei nutzt man die hohe Reflektion von Aluminiumpigmenten im infraroten Bereich, um wärmeisolierende Fassadenbeschichtungen herzustellen. Die Pigmente müssen beim Einsatz im Fassadenbau jedoch auch extremen Bedingungen standhalten. Es hat sich überraschend gezeigt, daß die erfindungsgemäßen mit einer anorganisch/organischen Mischschicht versehene Metalleffektpigmente ein hervorragende Eignung zur Verwendung beim Fassadenschutz aufweisen.

Bei einer weiteren erfindungsgemäßen Weiterbildung wird die anorganisch/organisch modifizierte Schicht zusätzlich durch die Verwendung von Netzwerkwandlern modifiziert. Netzwerkwandler bilden im Unterschied zu den organischen Netzwerkbildnern keine organischen Oligomere/Polymere aus und polymerisieren weder mit zugesetzten organischen Monomeren noch untereinander.

Bei organischen Netzwerkwandlern handelt es sich um Reagenzien, die sowohl mindestens eine hydrolysierbare Gruppe als auch mindestens eine organische Gruppe enthalten, die jedoch nicht notwendigerweise reaktiv oder polymerisationsfähig sein muß.
Organische Netzwerkwandler sind vorzugsweise Verbindungen gemäß der allgemeinen Formel (III)

R¹ₙR²ₘR³ₒSiX₍₄₋ₙ₋ₘ₋ₒ₎ (III),

wobei X für eine hydrolysierbare Gruppe, nach deren Hydrolyse eine kovalente Bindung von organischem Netzwerkwandler an das anorganische Netzwerk ausgebildet werden kann, steht,
und R¹, R² und R³ unabhängig voneinander jeweils für eine nicht-reaktive organische Gruppe stehen, mit der Maßgabe,
dass n, m und o ganze Zahlen sind, wobei n+m+o = 1-3 und n = 1 bis 3, m = 0 bis 2 und o = 0 bis 2 ist,
und/oder der allgemeinen Formel (IV)

R⁴ₚMX₍ₖ₋ₚ₎ (IV),

wobei die Verbindung wenigstens eine hydrolysierbare Gruppe X, nach deren Hydrolyse eine kovalente Bindung von organischem Netzwerkwandler mit dem anorganischen Netzwerk ausgebildet werden kann, und wenigstens einen nicht-reaktionsfähigen organischen Rest R⁴ aufweist, wobei
k für die formale Oxidationszahl von M steht,
M für Al, Zr oder Ti steht, und
p für eine ganze Zahl von 1 bis (k-1) steht.

Die hydrolysierbare oder kondensierbare Gruppe X der organischen Netzwerkwandler wird vorzugsweise aus der Gruppe, die aus Halogen, Hydroxy oder Alkoxy mit 1-10 C-Atomen, die linear oder verzweigt sein können, besteht, ausgewählt.

Die organisch funktionalisierten Gruppen R¹, R² und R³ werden vorzugsweise aus der Gruppe ausgewählt, die aus H-, Alkyl-, Alkenyl-, Alkinyl-, Aryl-, Alkylaryl-, Arylalkyl-, Alkenylaryl-, Arylalkinyl-, Alkinylaryl-, Cycloalkyl-, Alkylcycloalkyl-, Cycloalkylalkyl-, Amino-, Hydroxy-, Thiol-, Mercaptan-, fluorierte Alkyl, teilfluorierte Alkyl-, (teil)fluorierte Aryl-, (teil)fluorierte Alkylaryl-, Acrylat-, Methacrylat-, Vinyl-, Epoxy-, Carboxy- und Estergruppe besteht. Vorzugsweise weisen die Reste R¹, R² und R³ Kettenlängen mit 3 bis 20 Kohlenstoffatomen, weiter bevorzugt mit 5 bis 15 Kohlenstoffatomen auf. Die Reste R¹, R² und R³ können dabei zyklisch, verzweigt und/oder linear sein und Heteroatome wie O, S und N in der Kohlenstoffkette oder dem Kohlenstoffringsystem enthalten. Bezüglich der Länge der funktionellen Gruppen R¹, R² und R³ wird entsprechend auf die Ausführungen zum organischen Netzwerkbildner verwiesen.

Die oben angeführten Funktionalitäten der organischen Netzwerkwandler sind teilweise identisch mit jenen, die auch als organische Netzwerkbildner eingesetzt werden. Der Unterschied ergibt sich daraus, daß die Funktionalitäten in diesem Fall nicht untereinander und nicht mit organischen Monomeren oder Polymeren reagieren sollen. Dies ist dann der Fall, wenn die Funktionalitäten von R¹, R² und R³ hinsichtlich ihrer chemischen Reaktivität unterschiedlich zu den Funktionalitäten der Monomere oder auch zu jenen der organischen Oligomere und/oder Polymere sind. Somit kann durch Wahl von Netzwerkwandler und geeigneten Monomeren die Reaktion so gesteuert werden, daß keine Umsetzung von Netzwerkwandler untereinander und mit den Monomeren erfolgt.

Wird beispielsweise ausschließlich eine Mischung von organofunktionellen Silanen zum Aufbau der organischen Komponente, d.h. des organischen Oligomers und/oder Polymers, der Mischschicht verwendet, so fungieren alle organofunktionelle Silane, deren funktionelle Gruppen nicht untereinander reagieren, als organische Netzwerkwandler.

Als reine organische Netzwerkwandler geeignete organofunktionelle Silane sind vor allem Verbindungen ohne Funktionalitäten mit ausgeprägter chemischer Reaktivität. Darunter sind vor allem (C₁ - C₄₀)-Alkyl, (C₆ - C₃₆)Aryl, sowie per- oder teilfluorierte (C₁ - C₄₀)Alkyl und/oder (C₆ - C₄₀)Arylfunktionalitäten als Reste R¹, R² und R³ zu verstehen. Die Alkylreste können linear, verzweigt oder zyklisch sein. Beispiele sind:

Propyltri(m)ethoxysilan, Octyltri(m)ethoxysilan, Dodecyltri(m)ethoxysilan, Octadecyltri(m)ethoxysilan, Phenyltri(m)ethoxysilan, Diphenyldi(m)ethoxysilan, Perfluorooctyltri(m)ethoxysilan, 1-,1-,2-,2-,3-,3-,4-,4-Fluorooctyltri(m)ethoxysilan, 5-,5-,6-,6-,7-,7-,8-,8-,8- Fluorooctyltri(m)ethoxysilan, 1H-,1H-,2H-,2H-Perfluoroctyltriethoxysilan (Dynasylan F 8261).

Beispiele für organische Netzwerkwandler mit Ti, Zr oder Al als Zentralatom sind (siehe Ken-React Reference Manual - Titanate, Zirconate and Aluminate Coupling Agents by Salvatore J. Monte, erweitere Auflage Sommer 1993):
Isopropyltriisostrearyltitanat(IV) (KR TTS), Isopropyltri(dioctyl)phosphatotitanat(IV)
(KR 12), Isopropyltri(dodecyl)benzolsulfonyltitanat(IV) (KR 9S),
Isopropyltri(dioctyl)pyrophosphatotitanat(IV) (KR 38S),
Di(dioctyl)phosphatoethylentitantat(IV) (KR 212),
Di(dioctyl)pyrophosphatoethylentitantat(IV) (KR 238S),
Di(dioctyl)pyrophosphatooxoethylentitanta(IV) (KR 138S),
Diisobuty(stearyl)acetoacetylaluminat (KA 301).

Bei weiteren erfindungsgemäßen Weiterbildungen können die Substrate zunächst mit einer oder mehreren Beschichtungen, die entweder nur anorganischer oder nur organischer Natur sind, versehen werden, bevor die Mischschicht aufgebracht wird. Die Herstellung solcher rein anorganischer oder rein organischer Schichten ist dem Fachmann bestens bekannt.

Bei zusätzlichen erfindungsgemäßen Weiterbildungen können auf die anorganisch/organischen Mischschichten weitere rein anorganische und/oder rein organische Beschichtungen aufgebracht werden. Die Herstellung solcher Schichten ist dem Fachmann ebenfalls bestens bekannt.

Die Schichtdicken der rein anorganischen oder organischen Schichten liegen vorzugsweise zwischen 3 und 1.000 nm, bevorzugt zwischen 4 und 800 nm, besonders bevorzugt zwischen 5 und 500 nm und ganz besonders bevorzugt zwischen 7 und 50 nm.

Unter "rein anorganischen" Schichten werden hier Schichten mit einem organischen Anteil unterhalb von 4 Gew-% verstanden. Unter "rein organischen" Schichten versteht man Schichten mit einem anorganischen Anteil unterhalb von 4 Gew.-%. Die vorstehenden Angaben in Gew.-% beziehen sich jeweils auf das Gewicht der jeweiligen Schicht.

Die Reaktionsbedingungen für die Beschichtung mit rein anorganischen oder organischen Schichten vor oder nach dem Aufbringen der Mischschicht können ggf. von jenen, wie sie für die Mischschichtbildung nötig sind, abweichen. So kann beispielsweise die Reaktionstemperatur, das Lösemittel oder der pH-Wert verändert werden. Dies kann ggf. vor oder nach dem Auffällen der anorganischen/organischen Mischschicht auf dem Substrat einen Abbruch der Reaktion und eine Aufarbeitung des Vorproduktes beispielsweise durch Filtrieren und Trocknen im Vakuum erfordern. Bevorzugt jedoch wird dieBeschichtung mit einer rein anorganischen Schicht bzw. ein rein organischen Schicht im gleichen Medium wie die Beschichtung mit der anorganisch-organischen Mischschicht als Eintopfreaktion durchgeführt werden.

Es zeigte sich überraschenderweise, daß die anwendungstechnischen Vorteile der erhöhten mechanischen Stabilität und des verbesserten Korrosionsschutzes der anorganisch/organischen Mischschicht weitgehend unabhängig davon sind, ob weitere rein anorganische oder rein organische Schichten zwischen Substrat und Mischschicht und/oder auf der Mischschicht selbst vorhanden sind. Es kann von Vorteil sein, bei der Beschichtung zunächst nur mit der anorganischen Komponente zu beginnen. Auf diese Weise kann eine bessere Haftung der danach folgenden Mischschicht auf dem Substrat bewirkt werden. Dies gilt insbesondere, wenn die Mischschicht sehr hydrophobe Bestandteile, wie beispielsweise organische fluorierte Funktionalitäten, aufweist.

Eine weitere Beschichtung der Mischschicht mit einer beispielsweise reinen Oxidschicht ist ebenfalls vorteilhaft. Auf dieser Oxidschicht kann eine gewünschte Oberflächenmodifizierung unter Umständen besser durchgeführt werden, als dies auf der Mischschicht gegebenenfalls möglich ist. Dies gilt insbesondere, wenn die Mischschicht sehr hydrophobe Bestandteile aufweist und/oder einen sehr hohen Anteil an organischem Oligomer und/oder Polymer aufweist (z.B. >20 Gew.-%).

Bei einer rein anorganischen Beschichtung aus Metalloxiden/hydroxiden werden diese aus Oxiden, Metalloxidhydraten, Suboxiden und/oder Hydroxiden der Elemente aus der Gruppe, die aus Silizium, Titan, Aluminium, Zirkonium, Eisen, Kupfer, Zinn, Kobalt, Chrom, Cer, Nickel, Zinn, Vanadium, Tantal, Yttrium, Molybdän,Wolfram und deren Mischungen besteht, ausgewählt. Die Fällung einer solchen Schicht auf Metalleffektpigmente ist dem Fachmann bestens bekannt. Sie verläuft nach folgendem allgemeinen Verfahren:
(a) Das plättchenförmige Substrat wird in einem Lösemittel dispergiert und die Suspension auf Reaktionstemperatur gebracht.
(b) Sodann erfolgt die Zugabe einer oder mehrerer Metallverbindung(en) der Formel MXₙ, Einstellung eines geeigneten pH-Bereiches durch Zugabe geeigneter Säuren oder Basen und ggf. Zugabe von Wasser. M, X und n haben dabei dieselben Bedeutungen wie oben ausgeführt. Darüber hinaus kann M noch für Cu, Co, Ni, Sn, V, Ta, Y, Mo, und/oder W stehen. Ggfs. kann die Oxidschicht auch im Anschluss an die Abscheidung der anorganisch/organischen Mischschicht im gleichen Lösemittel auf die anorganisch/organische Mischschicht gefällt werden.
(c) Die Reaktion wird schließlich für eine gewisse Zeitspanne lang bei der Reaktionstemperatur weitergeführt und anschließend auf Raumtemperatur abgekühlt. Das Produkt wird nachfolgend vom Lösemittel getrennt.

Bei einer rein organischen Beschichtung kann diese beispielsweise aus Poly(meth)acrylaten, Polyester, Polyurethane, Polyole, Polyether oder Polyamiden bestehen. Die Fällung einer solchen Schicht auf Metalleffektpigmente ist dem Fachmann ebenfalls bestens bekannt. Sie verläuft nach folgendem allgemeinen Verfahren:
(a) Das plättchenförmige Substrat wird in einem Lösemittel dispergiert und die Suspension auf Reaktionstemperatur gebracht.
(b) Sodann erfolgt die Zugabe und/oder das Zutropfen einer oder mehrerer organischer Monomere und ggf. Polymerisationsinitiatoren, wodurch eine organische Polymerschicht gebildet wird. Vor der Aufbringung der organischen Polymerschicht kannoptional ein geeigneter Haftvermittler hinzugegeben werden, um eine bessere Anbindung des Polymeren an die Oberfläche des Metalleffektpigmentes zu gewährleisten, wie dies aus der DE 40 30 727 bekannt ist].
(c) Das beschichtete Pigment wird schließlich vom Reaktionsmedium abgetrennt.

Bei weiteren erfindungsgemäßen Weiterbildungen können die Metalleffektpigmente, die eine anorganisch/organische Mischschicht aufweisen, mit einem Oberflächenmodifizierungsmittel versehen werden. Derartige Oberflächenmodifizierungsmittel sind beispielsweise bereits aus der DE 198 20 112 bekannt. Mit diesem Oberflächenmodifizierungsmittel können die Metalleffektpigmente in ihren anwendungstechnischen Eigenschaften kompatibel zum jeweils verwendeten Applikationsmedium, beispielsweise einem Lack oder einer Druckfarbe, gestaltet werden.

Eine Verbesserung der korrosionsschützenden Eigenschaften einer Beschichtung oder der mechanischen Stabilisierung allein durch eine Oberflächenmodifizierung kann jedoch nicht erreicht werden.

Ggf. kann die Zugabe des Oberflächenmodifizierungsmittels auch im Anschluss an die Fällung der anorganisch/organischen Mischschicht oder der Fällung einer oder mehrerer weiterer anorganischer Schichten im gleichen Lösemittel erfolgen. Auch kann das Oberflächenmodifizierungsmittel in einem geeigneten Lösemittel gelöst und anschließend in einem Mischer auf die Metalleffektpigmente aufgebracht werden. Auch ist es möglich, das Oberflächenmodifizierungsmittel ggf. in trockener Form auf das erfindungsgemäße Metalleffektpigmente aufzubringen, wie beispielsweise durch Sprühtrocknung.

Das erfindungsgemäße Verfahren zur Herstellung von Metalleffektpigmenten mit anorganisch/organischer Mischschicht umfasst bei einer Variante die folgenden Schritte:
(a) Bereitstellen einer Reaktionsmischung von plättchenförmigen metallischen Substraten in einer Flüssigphase,
(b1) Zugeben wenigstens eines anorganischen Netzwerkbildners zu der Reaktionsmischung von Schritt (a),
(c1) Hydrolysieren und/oder Kondensieren des in Schritt (b1) zugegebenen anorganischen Netzwerkbildners,
(d1) Zugeben wenigstens eines reaktiven organischen Netzwerkbildners und wenigstens einer reaktiven organischen Komponente vor, während und/oder nach der Hydrolyse und/oder Kondensation von Schritt (c1),
   oder
(b2) Zugeben wenigstens eines reaktiven organischen Netzwerkbildners und wenigstens einer reaktiven organischen Komponente zu der Reaktionsmischung von Schritt (a),
(c2) Zugeben wenigstens eines anorganischen Netzwerkbildners zu der Reaktionsmischung von Schritt (b2),
(d2) Hydrolysieren und/oder Kondensieren des in Schritt (c2) zugegebenen anorganischen Netzwerkbildners,
   und
(e) Umsetzen von hydrolysiertem und/oder kondensiertem anorganischen Netzwerkbildner mit dem reaktiven organischen Netzwerbildner sowie der reaktiven organischen Komponente unter gleichzeitigem und/oder nachfolgendem Abscheiden einer anorganisch/organischen Mischschicht auf den plättchenförmigen Substraten, wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente wenigstens teilweise ein organisches Oligomer und/oder Polymer ist, welches wenigstens teilweise mit dem anorganischen Netzwerk kovalent verbunden ist,
(f) optional Abtrennen der in Schritt (e) beschichteten plättchenförmigen Substrate von der Reaktionsmischung.

Das erfindungsgemäße Verfahren kann gemäß einer Variante mithin auf Basis der Schritte (a), (b1), (c1), (d1), (e) sowie (f) oder auf Basis der Schritte (a), (b2), (c2), (d2), (e) sowie (f) durchgeführt werden.

Bevorzugt wird die wenigstens eine reaktive organische Komponente in Form von reaktiven polymerisierbaren organischen Monomeren, Oligomeren und/oder Polymeren zugegeben.

Weiterhin ist bevorzugt, daß als reaktive organische Komponente wenigstens ein reaktives Oligomer und/oder Polymer zugegeben wird.

Gemäß einer bevorzugten Weiterbildung des erfindungsgemäßen Verfahrens wird das reaktive Oligomer und/oder Polymer aus der Gruppe, die aus Polyacrylaten, Polymethacrylaten, Polyethern, Polyestern, Polyaminen, Polyamiden, Polyolen, Polyurethanen, Polyolefinen und Mischungen davon besteht, ausgewählt wird und optional zur Aktivierung vor Zugabe in die Reaktionsmischung oder in die Flüssigphase mit einem organischen Netzwerkbildner umgesetzt.

Weiterhin ist bevorzugt, daß die reaktive organische Komponente vor Zugabe in gebildet wird, indem ein oder mehrere verschiedene organische Netzwerkbildner mit reaktiven Gruppen R¹ untereinander, optional unter Zusatz von Polymerisationsinitiatoren, umgesetzt und nachfolgend zugesetzt werden.

Vorzugsweise wird das reaktive organische Oligomer und/oder Polymer aus der Gruppe, die aus Silanol- und/oder Methoxyterminierten Siliconen, Polyarylalkylsilsesquioxanen, Trialkoxysilan-modifizierten Polyethyleniminen, aminosilan-modifizierten Polyethylenoxidurethanen besteht, ausgewählt.

Gemäß einer weiteren Variante des erfindungsgemäßen Verfahrens wird das reaktive organische Oligomer und/oder Polymer aus der Gruppe, die aus Polyacrylaten, Polymethacrylaten, Polyether, Polyester, Polyamine, Polyamide, Polyole, Polyurethane und Polyolefine besteht, ausgewählt, wobei diese Oligomere und/oder Polymere über reaktive, nicht polymerisierte Funktionen verfügen.

Bei einer weiteren Variante des erfindungsgemäßen Verfahrens wird vor, während und/oder nach dem Zugeben der reaktiven organischen Komponente zusätzlich wenigstens ein organischer Netzwerkwandler zugegeben wird.

Im übrigen wird im Hinblick auf das erfindungsgemäße Verfahren zu den Ausführungen zu den erfindungsgemäßen Metalleffektpigmenten entsprechend verwiesen.

Als Flüssigphase können hierbei wässrige und/oder organische Lösungen verwendet werden. Bevorzugt sind organische Lösungen in Form von alkoholischen Lösungen, die einen Wassergehalt von 1 bis 80 Gew.-%, bevorzugt 2 bis 20 % und besonders bevorzugt 3 bis 10 Gew.-% besitzen. Ein Gehalt von mindestens 1 Gew.-% Wasser ist nötig, um die organischen und anorganischen Netzwerkbildner zu hydrolysieren. Die Angabe Gew.-% bezieht sich jeweils auf das Gesamtgewicht des Lösemittels.

Als organische Lösemittel können alle gängigen Lösemittel wie Alkohole, Ether, Ketone, Ester, Glykole oder Kohlenwasserstoffe oder deren Mischungen verwendet werden. Als bevorzugte Alkohole werden beispielsweise Methanol, Ethanol, n-Propanol, Isopropanol, n-Butanol oder 2-Butanol oder deren Mischungen verwendet.

Die Schritte (b) bis (e) der Beschichtungsreaktion finden bei Reaktionstemperaturen in einem Bereich von etwa 0°C bis etwa 100°C, bevorzugt von etwa 10°C bis etwa 80°C statt. Die Reaktionstemperaturen sind durch den Siedepunkt des verwendeten Lösemittels oder Lösemittelgemisches begrenzt.

Der pH-Wert bei den Schritten (b) bis (e) liegt in einem Bereich von 3 bis 12, bevorzugt von 7 bis 10. Der pH-Wert darf nicht zu sauer oder alkalisch sein, da die Metallpigmente von dem für die Reaktion verwendeten Wasser korrdiert werden. Daher sind neutrale bis leicht alkalische pH-Werte bevorzugt.

Nach dem optionalen Schritt (f) können die erfindungsgemäß beschichteten Metallpigmente einer Größenklassifikation, beispielsweise durch Sieben, unterzogen werden. Weiterhin können sie in einem geeigneten Aggregat ausgetrocknet werden. Nach dem Abtrennen der Pigmente vom Reaktionsgemisch ist ein Lösemittelwechsel möglich, bei dem ein anderes als für die Reaktion verwendetes Lösungsmittel zum ausgetrockneten Pigmentpulver gegeben wird. Auf diese Weise lassen sich Pasten herstellen, die einen Metallpigmentgehalt von 50 bis 90 Gew.-%, bevorzugt von 60 bis 75 Gew.-% aufweisen, wobei sich die Angabe Gew.-% auf das Gewicht der Paste bezieht.

Die erfindungsgemäß beschichteten Metalleffektpigmente finden Verwendung in Lacken, Farben, Druckfarben, Pulverlacken, Kunststoffen, Sicherheitsdruckfarben, Glas, Keramik, Bautenanstrichen oder Kosmetika.

Die erfindungsgemäßen Pigmente wurden hinsichtlich ihrer Gasungsstabilität nach einer starken mechanischen Belastung in einem Laborkneter untersucht.

Für diese Untersuchungen wurden folgende Testmethoden verwendet:

### Gasungstest Eisenoxidgelb

38,8 g Metallpigmentpulver wurden mit ca. 40 g eines kommerziell erhältlichen Basislackes und 41 g einer Eisenoxidpigmente enthaltenden Wassertönpaste Gelb vermengt. Anschließend gab man 240 g Basislack hinzu und dispergierte die Mischung 30 min lang mittels einer Dissolverzahnscheibe (∅ 50 mm) bei 2.000 U/min.
Der Wasserlack wurde dann in eine Gaswaschflasche, die mit einem Doppelkammergasblasenzähler versehen war, gefüllt und bei 40°C temperiert. Anhand des Füllstandes in mm des Doppelkammergasblasenzählers konnte die entwickelte Gasmenge abgelesen werden. Nach 7, 14, 21 und 28 Tagen wurde der Gasstand abgelesen. Der Test galt als bestanden, wenn sich nach 28 Tagen nicht mehr als 20 mm Wasserstoff entwickelten .

### Behandlung im Laborkneter

100 g Pigment wurden mit Isopropanol zu einer Paste mit 65% Feststoffgehalt ergänzt. Diese Paste wurde in einem Hochleistungslaborkneter (Fa. IKA) 5 min lang bei Raumtemperatur geknetet. Aufgrund der hohen Viskosität dieser Metalleffektpigmentpasten können mittels des mechanischen Einflusses der Duplex Knetschaufeln äußerst hohe Scherkräfte auf die Pigmente einwirken.
Anschließend wurde die derart behandelte Metallpigmentpaste dem vorstehend beschriebenen Gasungstest unterzogen, wobei bei der Einwaage der Lösemittelgehalt der Paste zu berücksichtigen ist.

Die folgenden Ausführungsbeispiele sollen die Erfindung weiter erläutern.

### Beispiele:

### Beispiel 1:

95 g Paliocrom L 2000 (Fa. BASF) werden in 310 ml Isopropanol dispergiert und bis zum Siedepunkt erhitzt. Dann gibt man 9 g Tetraethoxysilan hinzu und kurze Zeit später 9 g H₂O. Anschließend leitet man über einen Zeitraum von 3 h eine 25%-ige wäßrige NH₄OH-Lösung über einen Dosimaten so ein, daß während dieser Zeit ein pH-Wert von 8,7 erreicht und eingehalten wird. 1h nach Beginn dieser Zudosierung wird zusätzlich über einen Zeitraum von 85 min die Lösung A (siehe unten) kontinuierlich mit einem Labordosimaten (STEPDOS der Fa IKA) hinzudosiert. 5 min nach Beginn dieser Dosierung gibt man zum Start der Polymerisation eine Spatelspitze 2,2'-Azo-bis(iso-butyronitril) (AIBN) hinzu. Anschließend läßt man das Reaktionsgemisch noch 4h bei 88°C rühren. Anschließend wird eine Mischung aus 0,8 g Dynasylan OCTEO und 0,5 g Dynasylan AMMO zugegeben. Die Reaktionsmischung wird über Nacht gerührt und am nächsten Tag filtriert. Der Filterkuchen wird 6h lang bei 100°C in einem Vakuumtrockenschrank getrocknet.

Lösung A: 0,59 g Dynasylan MEMO und 2,51 g Trimethylolpropantrimethacrylat (TMPTMA) gelöst in 116 ml Ethanol.

### Beispiel 2: Herstellung analog Beispiel 1, nur wurde statt Isopropanol Ethanol als Lösemittel verwendet.

### Beispiel 3: Herstellung analog Beispiel 1, nur wurde folgende Lösung B verwendet:

0,59 g Dynasylan MEMO, 2,51 g TMPTMA und 0,5g Laurylmethacrylat gelöst in 116 ml Ethanol.

### Beispiel 4: Herstellung analog Beispiel 2, nur wurde folgende Lösung C verwendet:

0,59 g Dynasylan MEMO, 2,51 g TMPTMA und 0,5g Ethylenglycoldimethacrylat (EGDMA) gelöst in 116 ml Ethanol.

### Beispiel 5: Herstellung analog Beispiel 1, nur wurde folgende Lösung D verwendet:

0,59 g Dynasylan MEMO, 2,51 g TMPTMA und 0,47g Allylmethacrylat gelöst in 116 ml Isopropanol.

### Beispiel 6: Herstellung analog Beispiel 2, nur wurde folgende Lösung E verwendet:

1,0 g Dynasylan MEMO, 5,2 g TMPTMA gelöst in 116 ml Ethanol.

### Beispiel 7: Herstellung analog Beispiel 1, nur wurde folgende Lösung F verwendet:

1,0 g Dynasylan MEMO, 9,8 g TMPTMA gelöst in 116 ml Isopropanol.

### Beispiel 8: Herstellung analog Beispiel 2, jedoch ohne Verwendung von 2,2'-Azo-bis(iso-butyronitril) (AIBN) als Initiator, und es wurde folgende Lösung G verwendet:

1,0 g Dynasylan GLYMO, 2,0 g 1,6-Hexamethylendiamin und 0,5 g Pentaerythritpolyglycidether gelöst in 116 ml Ethanol.

### Beispiel 9: Herstellung analog Beispiel 1, jedoch ohne Verwendung von 2,2'-Azo-bis(iso-butyronitril) (AIBN) als Initiator, und es wurde folgende Lösung H verwendet:

1,0 g Dynasylan GLYMO, 2,0 g 1,6- Hexamethylendiamin und 0,5 g Trimethylolpropantriglycidether gelöst in 116 ml Isopropanol.

### Beispiel 10: Herstellung analog Beispiel 1, jedoch ohne Verwendung von 2.2'-Azo-bis(iso-butyronitril) (AIBN) als Initiator, und es wurde folgende Lösung I verwendet:

3,0 g Epoxidharz D.E.R: 330 gelöst in 100 g Isopropanol.

### Beispiel 11: Herstellung analog Beispiel 1, jedoch ohne Verwendung von 2,2'-Azo-bis(iso-butyronitril) (AIBN) als Initiator, und es wurde folgende Lösung J verwendet:

4,5 g Epoxidharz D.E.R: 330 gelöst in 100 g Isopropanol.

### Beispiel 12: Herstellung analog Beispiel 1, jedoch ohne Verwendung von 2,2'-Azo-bis(iso-butyronitril) (AIBN) als Initiator, und es wurde folgende Lösung K verwendet:

3,0 g Dimethyl-diphenylsiloxan (Silanol terminiertes Copolymer) (Nr PS084, ABCR) gelöst in 100 g Isopropanol.

### Beispiel 13: Herstellung analog Beispiel 3, es wurde jedoch bei einem pH-Wert von 8,4 gearbeitet.

### Beispiel 14: Herstellung analog Beispiel 4, es wurde jedoch bei einem pH-Wert von 8,4 gearbeitet.

### Beispiel 15: Herstellung analog Beispiel 5, es wurde jedoch bei einem pH-Wert von 8,7 gearbeitet.

### Beispiel 16: Herstellung analog Beispiel 6, es wurde jedoch bei einem pH-Wert von 8,4 gearbeitet und als Base statt NH₄OH eine Lösung von 2,4 g Methylamin in 20 ml Isopropanol verwendet.

### Beispiel 17: Herstellung analog Beispiel 6, es wurde jedoch bei einem pH-Wert von 8,7 gearbeitet und als Base statt NH₄OH eine Lösung von 2,4 g Methylamin in 20 ml Isopropanol verwendet.

### Vergleichsbeispiel 18 (nur SiO₂-Beschichtung):

95 g Paliocrom L 2000 wird in 310 ml Isopropanol dispergiert und bis zum Siedepunkt erhitzt. Dann gibt man 20 g Tetraethoxysilan hinzu und kurze Zeit 13 g H₂O. Anschließend leitet man über einen Zeitraum von 3 h eine 25%-ige wäßrige NH₄OH-Lösung über einen Dosimaten so ein, daß während dieser Zeit ein pH-Wert von 8,7 erreicht und eingehalten wird. Anschließend läßt man noch 3h lang weiter reagieren und gibt dann eine Mischung aus 1g Dynasylan OCTEO und 0,5 g Dynasylan AMMO hinzu. Die Reaktionsmischung wird über Nacht gerührt und am nächsten Tag abgenutscht. Der Filterkuchen wird 6h lang bei 100°C in einem Vakuumtrockenschrank getrocknet.

Die Gasung im Verlauf der Zeit ist in Tab. 1 dargestellt.

**Tab. 1: Gasungstests von verschiedenen Paliocrom-Proben**

| **Probe** | **Gasung in mm nach** | | | |
|---|---|---|---|---|
| | **7 d** | **14 d** | **21 d** | **28 d** |
| Beispiel 1 | 1 | 5 | 11 | 11 |
| Beispiel 1 nach Laborkneter | 2 | 3 | 3 | 3 |
| Beispiel 2 nach Laborkneter | 3 | 3 | 4 | 5 |
| Beispiel 3 nach Laborkneter | 4 | 4 | 6 | 7 |
| Beispiel 4 nach Laborkneter | 3 | 3 | 4 | 5 |
| Beispiel 5 nach Laborkneter | 4 | 4 | 5 | 5 |
| Beispiel 6 nach Laborkneter | 3 | 3 | 4 | 5 |
| Beispiel 7 nach Laborkneter | 3 | 4 | 5 | 6 |
| Beispiel 8 nach Laborkneter | 5 | 5 | 7 | 8 |
| Beispiel 9 nach Laborkneter | 6 | 6 | 7 | 7 |
| Beispiel 10 nach Laborkneter | 9 | 9 | 10 | 11 |
| Beispiel 11 nach Laborkneter | 7 | 7 | 8 | 9 |
| Beispiel 12 nach Laborkneter | | | | |
| Beispiel 13 nach Laborkneter | 3 | 4 | 4 | 5 |
| Beispiel 14 nach Laborkneter | 3 | 3 | 5 | 5 |
| Beispiel 15 nach Laborkneter | 4 | 5 | 6 | 6 |
| Beispiel 16 nach Laborkneter | 3 | 4 | 4 | 5 |
| Beispiel 17 nach Laborkneter | 4 | 4 | 6 | 7 |
| Vergl. Beispiel 18 | 0 | 0 | 0 | 1 |
| Vergl. Beispiel 18 nach Behandlung im Laborkneter | < 1d!! | ---- | ----- | ----- |

| | | | | |
|---|---|---|---|---|
| Anm.: Alle erfindungsgemäßen Beispiele bestanden ohne Behandlung im Laborkneter den Gasungstest. | | | | |

Sämtliche erfindungsgemäß beschichteten Beispiele bestanden auch nach einer Behandlung im Laborkneter den Gasungstest. Die mit SiO₂ beschichteten Metallpigmente gemäß Vergleichsbeispiel 18 hingegen bestanden nach der Scherbehandlung im Laborkneter nicht einmal einen Tag lang den Gasungstest. Da das ungescherte Pigment den Gasungstest mit fast keiner messbaren Gasentwicklung bestand, zeigt dies, daß ausschließlich mit einer anorganischen Beschichtung versehene Metallpigmente zwar im Hinblick auf die Gasungsstabilität hervorrragend, jedoch im Hinblick auf die mechanische Stabilität sehr unzufriedenstellend sind.

## Patentansprüche

1. Metalleffektpigmente mit Beschichtung, umfassend ein plättchenförmiges, metallisches Substrat,
**dadurch gekennzeichnet,**
**daß** die Beschichtung wenigstens eine anorganisch/organische Mischschicht umfasst, wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente wenigstens teilweise ein organisches Oligomer und/oder Polymer ist, welches wenigstens teilweise mit dem anorganischen Netzwerk über einen oder mehrere organische Netzwerkbildner kovalent verbunden ist.

2. Metalleffektpigmente nach Anspruch 1,
**dadurch gekennzeichnet,**
**daß** die wenigstens teilweise kovalente Bindung von anorganischer Oxidkomponente und organischem Oligomer und/oder Polymer wenigstens teilweise durch einen oder mehrere organische Netzwerkbildner erfolgt ist, welcher die allgemeine Formel (I)
R¹ₙR²ₘR³ₒSiX₍₄₋ₙ₋ₘ₋ₒ₎ (I)
aufweist, wobei X für eine hydrolysierbare Gruppe, nach deren Hydrolyse eine kovalente Bindung von organischem Netzwerkbildner mit dem anorganischen Netzwerk ausgebildet werden kann, steht
und R¹ für eine reaktive organische Gruppe steht, die mit dem organischen Oligomer und/oder Polymer kovalent verbindbar ist,
R² und R³ unabhängig voneinander jeweils für eine organische Gruppe stehen, die mit dem organischen Oligomer und/oder Polymer kovalent verbindbar sein können,
mit der Maßgabe,
**daß** n, m und o ganze Zahlen sind, wobei n+m+o = 1-3 und n = 1 bis 3, m = 0 bis 2 und o = 0 bis 2 ist,
und/oder die allgemeine Formel (II)
(R¹O)ₙ(R²O)ₘ(R³O)ₒMX₍ₖ₋ₙ₋ₘ₋ₒ₎ (II)
aufweist, wobei die Verbindung wenigstens eine hydrolysierbare Gruppe X, nach deren Hydrolyse eine kovalente Bindung von organischem Netzwerkbildner mit dem anorganischen Netzwerk ausgebildet werden kann, wenigstens einen organischen Rest R¹, der für eine reaktive organische Gruppe steht, die mit dem organischen Oligomer und/oder Polymer kovalent verbindbar ist, und R² und R³ unabhängig voneinander jeweils für eine organische Gruppe stehen können, die mit dem organischen Oligomer und/oder Polymer kovalent verbindbar sein können,
wobei
k für die formale Oxidationszahl von M steht,
M für Al, Zr oder Ti steht,
n für eine ganze Zahl von 1 bis (k-1) steht,
m für eine ganze Zahl von 0 bis (k-2) steht,
o für für eine ganze Zahl von 0 bis (k-2) steht, und
wobei n+m+o eine ganze Zahl von 1 bis k-1 ist.

3. Metalleffektpigmente nach Anspruch 1 oder 2,
**dadurch gekennzeichnet,**
**daß** die anorganische Oxidkomponente der Mischschicht aus der Gruppe, die aus Metalloxid, Metallsuboxid, Metallhydroxid, Metalloxidhydrat und Mischungen davon besteht, ausgewählt wird.

4. Metalleffektpigmente nach Anspruch 3,
**dadurch gekennzeichnet,**
**daß** die anorganische Oxidkomponente der Mischschicht aus Metalloxid und/oder Metallsuboxid und/oder Metallhydroxid und/oder Metalloxidhydrat von Elementen aus der Gruppe, die aus Silizium, Aluminium, Titan, Zirkonium, Eisen, Cer, Chrom, Mangan, Zink, Zinn, Antimon, Bor, Magnesium und deren Mischungen besteht, ausgewählt wird.

5. Metalleffektpigmente nach einem der Ansprüche 2 - 4,
**dadurch gekennzeichnet,**
**daß** der organische Netzwerkbildner ein Silan gemäß der allgemeinen Formel (I) ist, wobei die hydrolysierbare(n) Gruppe(n) X unabhängig voneinander aus der Gruppe, die aus Halogen, Hydroxy, Alkoxy mit 1-10 C-Atomen, welche geradkettig oder verzweigt sein können, und Mischungen davon besteht, ausgewählt wird.

6. Metalleffektpigmente nach einem der Ansprüche 2 - 4,
**dadurch gekennzeichnet,**
**daß** der organische Netzwerkbildner die allgemeine Formel (II) besitzt,
wobei die hydrolysierbare(n) Gruppe(n) X unabhängig voneinander aus der Gruppe, die aus Halogen, Hydroxy, Alkoxy mit 1-20 C-Atomen, welche geradkettig oder verzweigt sein können und Heteroatome, vorzugsweise O, S und/oder N, in der Kohlenstoffkette aufweisen können, und Mischungen davon besteht, ausgewählt wird.

7. Metalleffektpigmente nach einem der Ansprüche 2 - 6,
**dadurch gekennzeichnet,**
**daß** R¹ ein reaktiver organischer Rest ist, der einen oder mehrere Substituenten aufweist, die aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamatgruppe und Mischungen davon besteht, ausgewählt werden.

8. Metalleffektpigmente nach einem der Ansprüche 2 - 7,
**dadurch gekennzeichnet,**
**daß** R² und R³ unabhängig voneinander aus der Gruppe, die aus H-, (C₁ - C₄₀)-Alkyl-, (C₁ - C₄₀)-fluorierte Alkyl-, (C₁ - C₄₀)-teilfluorierte Alkyl-; (C₂ - C₄₀)-Alkenyl-, (C₂ - C₄₀)-Alkinyl-; (C₆ - C₃₆)-Aryl-, fluorierte (C₆ - C₃₆)-Aryl-teilfluorierte (C₆ - C₃₆)-Aryl-; (C₇ - C₄₀)-Alkylaryl-, (C₇ - C₄₀)-Arylalkyl-, fluorierte (C₇ - C₄₀)-Alkylaryl-, teilfluorierte (C₇ - C₄₀)-Alkylaryl-: (C₈ - C₄₀)-Alkenylaryl-, (C₈ - C₄₀)-Arylalkinyl-, -; (C₈ - C₄₀)-Alkinylaryl-; (C₅ - C₄₀)-Cycloalkyl-, (C₆ - C₄₀)-Alkylcycloalkyl-, (C₆ - C₄₀)-Cycloalkylalkylsilane, die jeweils mit Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamat- und/oder Estergruppe substituiert sein und in den Kohlenstoffketten und Kohlenstoffringsystemen O, N und S als Heteroatome enthalten können, und Mischungen davon besteht, ausgewählt werden.

9. Metalleffektpigmente nach einem der vorhergehenden Ansprüche,
**dadurch gekennzeichnet,**
**daß** das organische Oligomer und/oder Polymer aus Monomeren aufgebaut ist, die mit Funktionalitäten aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido- und Carbamatgruppe und Mischungen davon besteht, ausgestattet sind.

10. Metalleffektpigmente nach einem der Ansprüche 1 - 8,
**dadurch gekennzeichnet,**
**daß** die organische Komponente aus reaktiven organischen Oligomeren und/oder Polymeren aufgebaut ist, welche reaktionsfähige Gruppen aufweisen, die an das anorganische Netzwerk und/oder mindestens an die Gruppe R¹ der organischen Netzwerkbildner anbinden können.

11. Metalleffektpigmente nach Anspruch 10,
**dadurch gekennzeichnet,**
**dass** das reaktive organische Oligomer und/oder Polymer aus der Gruppe, die aus Silanol- und/oder Methoxy-terminierten Siliconen, Trialkoxysilan-modifizierten Polyethyleniminen, Polyarylalkylsilsesquioxanen, Aminosilan-modifizierten Polyethylenoxidurethanen und Mischungen davon besteht, ausgewählt wird.

12. Metalleffektpigmente nach Anspruch 10,
**dadurch gekennzeichnet,**
**dass** das reaktive organische Oligomer und/oder Polymer aus der Gruppe, die aus Polyacrylaten, Polymethacrylaten, Polyethern, Polyestern, Polyaminen, Polyamiden, Polyolen, Polyurethanen und Polyolefinen besteht, ausgewählt wird, wobei diese Oligomere und/oder Polymere reaktive funktionelle Gruppen aufweisen, die an das anorganische Netzwerk oder einen organischen Netzwerkbildner binden können.

13. Metalleffektpigmente nach einem derAnsprüche 2 - 12,
**dadurch gekennzeichnet,**
**daß** das organische Oligomer und/oder Polymer über die funktionellen Gruppe R¹ eines oder mehrerer organische Netzwerkbildner in der anorganisch/organischen Mischschicht kovalent gebunden ist,

14. Metalleffektpigmente nach einem der vorhergehenden Ansprüche,
**dadurch gekennzeichnet,**
**daß** die anorganisch/organische Mischschicht zusätzlich durch einen oder mehrere organische Netzwerkwandler mit der allgemeinen Formel (III)
R¹ₙR²ₘR³ₒSiX₍₄₋ₙ₋ₘ₋ₒ₎ (III)
modifiziert ist, wobei X für eine hydrolysierbare Gruppe, nach deren Hydrolyse eine kovalente Bindung von organischem Netzwerkwandler an das anorganische Netzwerk ausgebildet werden kann, steht,
und R¹, R² und R³ unabhängig voneinander jeweils für eine nicht-reaktive organische Gruppe stehen, mit der Maßgabe,
**dass** n, m und o ganze Zahlen sind, wobei n+m+o = 1-3 und n = 1 bis 3, m = 0 bis 2 und o = 0 bis 2 ist,
und/oder durch einen oder mehrere organischen Netzwerkwandler mit der allgemeinen Formel (IV)
(R⁴)ₚMX₍ₖ₋ₚ₎ (IV)
modifiziert ist, wobei die Verbindung wenigstens eine hydrolysierbare Gruppe X, nach deren Hydrolyse eine kovalente Bindung von organischem Netzwerkwandler mit dem anorganischen Netzwerk ausgebildet werden kann, und wenigstens einen nicht-reaktionsfähigen organischen Rest R⁴ aufweist, wobei
k für die formale Oxidationszahl von M steht,
M für Al, Zr oder Ti steht, und
p für eine ganze Zahl von 1 bis (k-1) steht.

15. Metalleffektpigmente nach einem der vorangegangenen Ansprüche,
**dadurch gekennzeichnet,**
**daß** das plättchenförmige Substrat aus Metallen die aus der Gruppe, die aus Aluminium, Kupfer, Eisen, Zink, Zinn, Titan, Chrom, Kobalt, Silber, Nickel, Antimon, Magnesium, Zirkonium, Silizium sowie Mischungen und Legierungen davon, insbesondere Goldbronzen, Messing, Edelstahl und Stahl besteht, ausgewählt werden, besteht.

16. Metalleffektpigmente nach Anspruch 15,
**dadurch gekennzeichnet,**
**daß** die im wesentlichen aus Eisen bestehenden plättchenförmigen Substrate aus reduziertem Carbonyleisen hergestellt sind.

17. Metalleffektpigmente nach einem der vorhergehenden Ansprüche,
**dadurch gekennzeichnet,**
**daß** zwischen Substrat und anorganisch/organischer Mischschicht wenigstens eine separate im wesentlichen rein anorganische Schicht und/oder wenigstens eine separate Schicht aus im wesentlichen rein organischem Polymer angeordnet ist.

18. Metalleffektpigmente nach einem der vorhergehenden Ansprüche,
**dadurch gekennzeichnet,**
**daß** auf der anorganisch/organischen Mischschicht wenigstens eine separate im wesentlichen rein anorganische Schicht und/oder wenigstens eine separate Schicht aus im wesentlichen rein organischem Polymer angeordnet ist.

19. Metalleffektpigmente nach einem der Ansprüche 17 oder 18,
**dadurch gekennzeichnet,**
**daß** die wenigstens eine separate im wesentlichen rein anorganische Schicht aus Metalloxid und/oder Metalloxidhydrat und/oder Metallsuboxid und/oder Metallhydroxid und/oder Metallperoxid von Elementen, die aus der Gruppe, die aus Silizium, Titan, Aluminium, Zirkonium, Eisen, Kupfer, Zinn, Kobalt, Chrom, Cer, Zink, Antimon, Mangan, Nickel, Yttrium, Molybdän, Vanadium, Tantal, Wolfram und deren Mischungen besteht, ausgewählt werden, besteht.

20. Metalleffektpigmente nach einem der Ansprüche 17 oder 18,
**dadurch gekennzeichnet,**
**daß** die wenigstens eine separate im wesentlichen rein organische Polymerschicht aus der Gruppe, die aus Polyacrylat, Polymethacrylat, Polyether, Polyester, Polyamin, Polyamid, Polyol, Polyurethan, Polyphenolformaldehyd, Polyolefin, Poly-1,2,3,4,-tetrafluorethylen und Mischungen davon besteht, ausgewählt wird.

21. Metalleffektpigmente nach einem der vorhergehenden Ansprüche,
**dadurch gekennzeichnet,**
**daß** auf der Oberfläche der beschichteten Metalleffektpigmente eine zusätzliche Schicht mit einem oder mehreren Oberflächenmodifizierungsmittel aufgebracht ist.

22. Verfahren zur Herstellung von Metalleffektpigmenten nach Anspruch 1 mit anorganisch/organischer Mischschicht, das die folgenden Schritte umfasst:
- Umsetzen wenigstens eines anorganischen Netzwerkbildners und wenigstens eines organischen Netzwerkbildners und wenigstens einer reaktiven organischen Komponente in einer Flüssigphase unter Ausbildung einer Beschichtungszusammensetzung,
- Aufbringen der Beschichtungszusammensetzung auf plättchenförmige metallische Substrate als Mischschicht,
wobei die plättchenförmigen metallischen Substrate vor, während oder nach dem Zugeben oder Umsetzen des wenigstens einen anorganischen Netzwerkbildners und des wenigstens einen organischen Netzwerkbildners und der wenigstens einen reaktiven organischen Komponente zu der Flüssigphase zugegeben werden,
wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente wenigstens teilweise ein organisches Oligomer und/oder Polymer ist, welches wenigstens teilweise mit dem anorganischen Netzwerk kovalent verbunden ist.

23. Verfahren nach Anspruch 22, das die folgenden Schritte umfasst:
(a) Bereitstellen einer Reaktionsmischung von plättchenförmigen metallischen Substraten in einer Flüssigphase,
(b1) Zugeben wenigstens eines anorganischen Netzwerkbildners zu der Reaktionsmischung von Schritt (a),
(c1) Hydrolysieren und/oder Kondensieren des in Schritt (b1) zugegebenen anorganischen Netzwerkbildners,
(d1) Zugeben wenigstens eines reaktiven organischen Netzwerkbildners und wenigstens einer reaktiven organischen Komponente vor, während und/oder nach der Hydrolyse und/oder Kondensation von Schritt (c1),
oder
(b2) Zugeben wenigstens eines reaktiven organischen Netzwerkbildners und wenigstens einer reaktiven organischen Komponente zu der Reaktionsmischung von Schritt (a),
(c2) Zugeben wenigstens eines anorganischen Netzwerkbildners zu der Reaktionsmischung von Schritt (b2),
(d2) Hydrolysieren und/oder Kondensieren des in Schritt (c2) zugegebenen anorganischen Netzwerkbildners,
und
(e) Umsetzen von hydrolysiertem und/oder kondensiertem anorganischen Netzwerkbildner mit dem reaktiven organischen Netzwerkbildner sowie der reaktiven organischen Komponente unter gleichzeitigem und/oder nachfolgendem Abscheiden der anorganisch/organischen Mischschicht, (f) optional Abtrennen der in Schritt (e) beschichteten plättchenförmigen Substrate von der Reaktionsmischung.

24. Verfahren gemäß Anspruch 22 oder 23,
**dadurch gekennzeichnet,**
**daß** die reaktive organische Komponente in Form von reaktiven polymerisierbaren organischen Monomeren, Oligomeren und/oder Polymeren zugegeben wird.

25. Verfahren gemäß Anspruch 23,
**dadurch gekennzeichnet,**
**daß** als reaktive organische Komponente wenigstens ein reaktives Oligomer und/oder Polymer zugegeben wird.

26. Verfahren gemäß einem der Ansprüche 22 - 25,
**dadurch gekennzeichnet,**
**daß** der wenigstens eine organische Netzwerkbildner die allgemeine Formel (I)
R¹ₙR²ₘR³ₒSiX₍₄₋ₙ₋ₘ₋ₒ₎ (I)
aufweist, wobei X für eine hydrolysierbare Gruppe, nach deren Hydrolyse eine kovalente Bindung von organischem Netzwerkbildner mit dem anorganischen Netzwerk ausgebildet werden kann, steht,
und R¹ für eine reaktive organische Gruppe steht, die mit einem organischen Oligomer und/oder Polymer kovalent verbindbar ist,
R² und R³ unabhängig voneinander jeweils für eine organische Gruppe stehen, die mit einem organischen Oligomer und/oder Polymer kovalent verbindbar sein können,
mit der Maßgabe,
**daß** n, m und o ganze Zahlen sind, wobei n+m+o = 1-3 und n = 1 bis 3, m = 0 bis 2 und o = 0 bis 2 ist,
und/oder der wenigstens eine organische Netzwerkbildner die allgemeinen Formel (II)
(R¹O)ₙ(R²O)ₘ(R³O)ₒMX₍ₖ₋ₙ₋ₘ₋ₒ₎ (II)
aufweist, wobei die metallorganische Verbindung wenigstens eine hydrolysierbare Gruppe X, nach deren Hydrolyse eine kovalente Bindung von organischem Netzwerkbildner mit dem anorganischen Netzwerk ausgebildet werden kann, wenigstens einen organischen Rest R¹, der für eine reaktive organische Gruppe steht, die mit einem organischen Oligomer und/oder Polymer kovalent verbindbar ist, und R² und R³ unabhängig voneinander jeweils für eine organische Gruppe stehen können, die mit einem organischen Oligomer und/oder Polymer kovalent verbindbar sein können, wobei
k für die formale Oxidationszahl von M steht,
M für Al, Zr oder Ti steht,
n für eine ganze Zahl von 1 bis (k-1) steht,
m für eine ganze Zahl von 0 bis (k-2) steht,
o für für eine ganze Zahl von 0 bis (k-2) steht, und
wobei n+m+o eine ganze Zahl von 1 bis k-1 ist.

27. Verfahren nach einem der Ansprüche 22 bis 26,
**dadurch gekennzeichnet,**
**daß** die anorganische Oxidkomponente der Mischschicht aus der Gruppe, die aus Metalloxid, Metalloxidhydrat, Metallsuboxid, Metallhydroxid und Mischungen davon besteht, ausgewählt wird.

28. Verfahren nach einem der Ansprüche 22 bis 27,
**dadurch gekennzeichnet,**
**daß** die anorganische Oxidkomponente der Mischschicht aus Metalloxid und/oder Metalloxidhydrat und/oder Metallsuboxid und/oder Metallhydroxid von Elementen aus der Gruppe, die aus Silizium, Aluminium, Titan, Zirkonium, Eisen, Cer, Chrom, Mangan, Zink, Antimon, Bor, Magnesium und deren Mischungen besteht, ausgewählt wird.

29. Verfahren nach einem der Ansprüche 22 bis 28,
**dadurch gekennzeichnet,**
**daß** der organische Netzwerkbildner ein Silan gemäß der allgemeinen Formel (I) ist, wobei die hydrolysierbare(n) Gruppe(n) X unabhängig voneinander aus der Gruppe, die aus Halogen, Hydroxy, Alkoxy mit 1-10 C-Atomen, welche geradkettig oder verzweigt sein können, und Mischungen davon besteht, ausgewählt wird.

30. Verfahren nach einem der Ansprüche 22 bis 28,
**dadurch gekennzeichnet,**
**daß** der organische Netzwerkbildner die allgemeine Formel (II) besitzt,
wobei die hydrolysierbare(n) Gruppe(n) X unabhängig voneinander aus der Gruppe, die aus Halogen, Hydroxy, Alkoxy mit 1-20 C-Atomen, welche geradkettig oder verzweigt sein können und Heteroatome, vorzugsweise O, S und/oder N, in der Kohlenstoffkette aufweisen können, und Mischungen davon besteht, ausgewählt wird.

31. Verfahren nach einem der Ansprüche 26 bis 30,
**dadurch gekennzeichnet,**
**daß** R¹ ein reaktiver organischer Rest ist, der einen oder mehrere Substituenten aufweist, die aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamatgruppe und Mischungen davon besteht, ausgewählt werden.

32. Verfahren nach einem der Ansprüche 26 bis 31,
**dadurch gekennzeichnet,**
**daß** R² und R³ unabhängig voneinander aus der Gruppe, die aus H-, (C₁ - C₄₀)-Alkyl-, (C₁ - C₄₀)-fluorierte Alkyl-, (C₁ - C₄₀)-teilfluorierte Alkyl-; (C₂ - C₄₀)-Alkenyl-, (C₂ - C₄₀)-Alkinyl-; (C₆ - C₃₆)-Aryl-, fluorierte (C₆ - C₃₆)-Aryl-, teilfluorierte (C₆ - C₃₆)-Aryl-; (C₇ - C₄₀)-Alkylaryl-, (C₇ - C₄₀)-Arylalkyl-, fluorierte (C₇ - C₄₀)-Alkylaryl-, teilfluorierte (C₇ - C₄₀)-Alkylaryl-; (C₈ - C₄₀)-Alkenylaryl-, (C₈ - C₄₀)-Arylalkinyl-, -; (C₈ - C₄₀)-Alkinylaryl-; (C₅ - C₄₀)-Cycloalkyl-, (C₆ - C₄₀)-Alkylcycloalkyl-, (C₆ - C₄₀)-Cycloalkylalkylsilane, die jeweils mit Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamat- und/oder Estergruppe substituiert sein und in den Kohlenstoffketten und Kohlenstoffringsystemen O ,N und S als Heteroatome enthalten können, und Mischungen davon besteht, ausgewählt werden.

33. Verfahren nach einem der Ansprüche 25 bis 32,
**dadurch gekennzeichnet,**
**daß** das reaktive organische Oligomer und/oder Polymer aus reaktiven Monomeren aufgebaut wird, die mit Funktionalitäten aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido- und Carbamatgruppe und Mischungen davon besteht, ausgestattet sind.

34. Verfahren nach einem der Ansprüche 25 bis 32 ,
**dadurch gekennzeichnet,**
**daß** das reaktive Oligomer und/oder Polymer aus der Gruppe, die aus Polyacrylaten, Polymethacrylaten, Polyethern, Polyestern, Polyaminen, Polyamiden, Polyolen, Polyurethanen, Polyolefinen und Mischungen davon besteht, ausgewählt wird und optional zur Aktivierung vor Zugabe in die Reaktionsmischung mit einem organischen Netzwerkbildner umgesetzt wird.

35. Verfahren nach einem der Ansprüche 22 bis 34,
**dadurch gekennzeichnet,**
**daß** die reaktive organische Komponente vor Zugabe gebildet wird, indem ein oder mehrere verschiedene organische Netzwerkbildner mit reaktiven Gruppen R¹ untereinander, optional unter Zusatz von Polymerisationsinitiatoren, umgesetzt und nachfolgend in zugesetzt werden.

36. Verfahren nach Anspruch 25,
**dadurch gekennzeichnet,**
**daß** das reaktive organische Oligomer und/oder Polymer aus der Gruppe, die aus Silanol- und/oder Methoxy-terminierten Siliconen, Polyarylalkylsilsesquioxanen, Trialkoxysilan-modifizierten Polyethyleniminen, Aminosilan-modifizierten Polyethylenoxidurethanen besteht, ausgewählt wird.

37. Verfahren nach Anspruch 25,
**dadurch gekennzeichnet,**
**dass** das reaktive organische Oligomer und/oder Polymer aus der Gruppe, die aus Polyacrylaten, Polymethacrylaten, Polyether, Polyester, Polyamine, Polyamide, Polyole, Polyurethane und Polyolefine besteht, ausgewählt wird, wobei diese Oligomere und/oder Polymere über reaktive Funktionen verfügen.

38. Verfahren nach einem der Ansprüche 22 bis 37,
**dadurch gekennzeichnet,**
**daß** vor, während und/oder nach dem Zugeben des reaktiven organischen Netzwerkbildners zusätzlich wenigstens ein organischer Netzwerkwandler zugegeben wird.

39. Verfahren nach Anspruch 38,
**dadurch gekennzeichnet,**
**daß** der zusätzlich zugegebene wenigstens eine organische Netzwerkwandler die allgemeine Formel (III)
R¹ₙR²ₘR³ₒSiX₍₄₋ₙ₋ₘ₋ₒ₎ (III)
aufweist, wobei X für eine hydrolysierbare Gruppe, nach deren Hydrolyse eine kovalente Bindung von organischem Netzwerkwandler an das anorganische Netzwerk ausgebildet werden kann, steht,
und R¹, R² und R³ unabhängig voneinander jeweils für eine nicht-reaktive organische Gruppe stehen,
mit der Maßgabe.
**daß** n, m und o ganze Zahlen sind, wobei n+m+o = 1-3 und n = 1 bis 3, m = 0 bis 2 und o = 0 bis 2 ist,
und/oder der zusätzlich zugegebene wenigstens eine organische Netzwerkwandler die allgemeine Formel (IV)
(R⁴)ₚMX₍ₖ₋ₚ₎ (IV)
aufweist, wobei die metallorganische Verbindung wenigstens eine hydrolysierbare Gruppe X, nach deren Hydrolyse eine kovalente Bindung von organischem Netzwerkwandler mit dem anorganischen Netzwerk ausgebildet werden kann, und wenigstens einen nicht-reaktionsfähigen organischen Rest R⁴ aufweist, wobei
k für die formale Oxidationszahl von M steht,
M für Al, Zr oder Ti steht, und
p für eine ganze Zahl von 1 bis (k-1) steht.
besitzt.

40. Verfahren gemäß einem der Ansprüche 22 bis 39,
**dadurch gekennzeichnet,**
**daß** vor dem Aufbringen der anorganisch/organischen Mischschicht auf dem plättchenförmigen Substrat eine oder mehrere im wesentlichen rein anorganische und/oder im wesentlichen rein organische Schichten aufgebracht werden.

41. Verfahren gemäß einem der Ansprüche 22 bis 40,
**dadurch gekennzeichnet,**
**daß** nach dem Aufbringen der anorganisch/organischen Mischschicht eine oder mehrere im wesentlichen rein anorganische und/oder im wesentlichen rein organische Schichten aufgebracht werden.

42. Verfahren gemäß einem der Ansprüche 22 bis 41,
**dadurch gekennzeichnet,**
**daß** als äußerste Schicht eine Schicht mit einem oder mehreren Oberflächenmodifizierungsmitteln aufgebracht wird.

43. Verfahren gemäß einem der Ansprüche 22 bis 42,
**dadurch gekennzeichnet,**
**daß** als Flüssigphase wässrige und/oder alkoholische Lösungen verwendet werden.

44. Verfahren gemäß einem der Ansprüche 23 bis 43,
**dadurch gekennzeichnet,**
**daß** die Reaktionstemperatur bei den Schritten (b) bis (e) in einem Bereich von etwa 0°C bis etwa 100°C, bevorzugt von etwa 10°C bis etwa 80°C, liegt.

45. Verfahren gemäß einem der Ansprüche 23 bis 44,
**dadurch gekennzeichnet,**
**daß** der pH-Wert bei den Schritten (b) bis (e) in einem Bereich von 1,5 bis 12, bevorzugt von 7 bis 10, liegt.

46. Verwendung des plättchenförmigen Metalleffektpigmentes nach einem der Ansprüche 1 bis 21 in Lacken, Automobillacken, Farben, Druckfarben, Pulverlacken, Bautenanstrichen, Kunststoffen, Sicherheitsdruckfarben, Keramiken, Glas oder kosmetischen Zubereitungen.

47. Verwendung eines plättchenförmigen Metalleffektpigmentes nach einem der Ansprüche 1 bis 21 als IR-reflektierende Pigmente in Fassaden-und/oder Bautenanstrichen.

## Claims

1. Metallic effect pigments with coating, comprising a platelet-shaped, metallic substrate, **characterized in that** the coating comprises at least one hybrid inorganic/organic layer, the hybrid layer having at least partly an inorganic network that has one or more inorganic oxide components, and having at least one organic component, the organic component being at least partly an organic oligomer and/or polymer which is covalently bonded at least partly to the inorganic network via one or more organic network formers.

2. Metallic effect pigments according to Claim 1, **characterized in that** the at least partial covalent bonding of inorganic oxide component and organic oligomer and/or polymer is accomplished at least partly through one or more organic network formers of the general formula (I)
R¹ₙR²R³ₒSiX₍₄₋ₙ₋ₘ₋ₒ₎ (I)
where X is a hydrolysable group after whose hydrolysis a covalent bond of organic network former to the inorganic network can be formed
and R¹ is a reactive organic group which is covalently bondable to the organic oligomer and/or polymer,
R² and R³ independently of one another are each an organic group which may be covalently bondable to the organic oligomer and/or polymer,
with the proviso that
n, m and o are integers, with n+m+o = 1-3 and n = 1 to 3, m = 0 to 2, and o = 0 to 2,
and/or the general formula (II)
(R¹O)ₙ(R²O)ₘ(R³O)ₒMX₍ₖ₋ₙ₋ₘ₋ₒ₎ (II)
where the compound has at least one hydrolysable group X after whose hydrolysis a covalent bond of organic network former to the inorganic network can be formed, at least one organic radical R¹ which is a reactive organic group which is covalently bondable to the organic oligomer and/or polymer, and R² and R³ independently of one another may each be an organic group which may be covalently bondable to the organic oligomer and/or polymer,
where
k is the formal oxidation number of M,
M is Al, Zr or Ti,
n is an integer from 1 to (k-1),
m is an integer from 0 to (k-2),
o is an integer from 0 to (k-2), and
where n+m+o is an integer from 1 to k-1.

3. Metallic effect pigments according to Claim 1 or 2, **characterized in that** the inorganic oxide component of the hybrid layer is selected from the group consisting of metal oxide, metal suboxide, metal hydroxide, metal oxide hydrate, and mixtures thereof.

4. Metallic effect pigments according to Claim 3, **characterized in that** the inorganic oxide component of the hybrid layer is selected from metal oxide and/or metal suboxide and/or metal hydroxide and/or metal oxide hydrate of elements from the group consisting of silicon, aluminum, titanium, zirconium, iron, cerium, chromium, manganese, zinc, tin, antimony, boron, magnesium, and mixtures thereof.

5. Metallic effect pigments according to any one of Claims 2 - 4, **characterized in that** the organic network former is a silane of the general formula (I), the hydrolysable group(s) X being selected independently of one another from the group consisting of halogen, hydroxyl, alkoxy having 1-10 C atoms, which may be straight-chain or branched, and mixtures thereof.

6. Metallic effect pigments according to any one of Claims 2 - 4, **characterized in that** the organic network former possesses the general formula (II), the hydrolysable group(s) X being selected independently of one another from the group consisting of halogen, hydroxyl, alkoxy having 1-20 C atoms, which may be straight-chain or branched and may contain heteroatoms, preferably O, S and/or N, in the carbon chain, and mixtures thereof.

7. Metallic effect pigments according to any one of Claims 2 - 6, **characterized in that** R¹ is a reactive organic radical which has one or more substituents selected from the group consisting of amino, hydroxyl, thiol, epoxy, acrylate, methacrylate, vinyl, allyl, alkenyl, alkynyl, carboxyl, carboxylic anhydride, isocyanate, cyanate, ureido, and carbamate group and mixtures thereof.

8. Metallic effect pigments according to any one of Claims 2 - 7, **characterized in that** R² and R³ are selected independently of one another from the group consisting of H-, (C₁-C₄₀)-alkyl-, (C₁-C₄₀)-fluorinated alkyl-, (C₁-C₄₀)-partially fluorinated alkyl-; (C₂-C₄₀)-alkenyl-, (C₂-C₄₀) -alkynyl-; (C₆-C₃₆) -aryl-, fluorinated (C₆-C₃₆)-aryl-, partially fluorinated (C₆-C₃₆)-aryl-; (C₇-C₄₀)-alkylaryl-, (C₇-C₄₀)-arylalkyl-, fluorinated (C₇-C₄₀)-alkylaryl-, partially fluorinated (C₇-C₄₀)-alkylaryl-; (C₈-C₄₀)-alkenylaryl-, (C₈-C₄₀)-arylalkynyl-, -; (C₈-C₄₀) -alkynylaryl-; (C₅-C₄₀)-cycloalkyl-, (C₆-C₄₀)-alkylcycloalkyl-, (C₆-C₄₀)-cycloalkylalkylsilanes each of which may be substituted by amino, hydroxyl, thiol, epoxy, acrylate, methacrylate, vinyl, allyl, alkenyl, alkynyl, carboxyl, carboxylic anhydride, isocyanate, cyanate, ureido, carbamate and/or ester group and may contain O, N, and S as heteroatoms in the carbon chains and carbon ring systems, and mixtures thereof.

9. Metallic effect pigments according to any one of the preceding claims, **characterized in that** the organic oligomer and/or polymer is constructed from monomers provided with functionalities from the group consisting of amino, hydroxyl, thiol, epoxy, acrylate, methacrylate, vinyl, allyl, alkenyl, alkynyl, carboxyl, carboxylic anhydride, isocyanate, cyanate, ureido, and carbamate group and mixtures thereof.

10. Metallic effect pigments according to any one of Claims 1 - 8, **characterized in that** the organic component is constructed from reactive organic oligomers and/or polymers which have reactive groups which are able to attach to the inorganic network and/or at least to the group R¹ of the organic network formers.

11. Metallic effect pigments according to Claim 10, **characterized in that** the reactive organic oligomer and/or polymer is selected from the group consisting of silanol- and/or methoxy-terminated silicones, trialkoxysilane-modified polyethyleneimines, polyarylalkylsilasesquioxanes, aminosilane-modified polyethylene oxide urethanes, and mixtures thereof.

12. Metallic effect pigments according to Claim 10, **characterized in that** the reactive organic oligomer and/or polymer is selected from the group consisting of polyacrylates, polymethacrylates, polyethers, polyesters, polyamines, polyamides, polyols, polyurethanes, and polyolefins, these oligomers and/or polymers having reactive functional groups which are able to bond to the inorganic network or an organic network former.

13. Metallic effect pigments according to any one of Claims 2 - 12, **characterized in that** the organic oligomer and/or polymer is covalently bonded via the functional groups R¹ of one or more organic network formers in the hybrid inorganic/organic layer.

14. Metallic effect pigments according to any one of the preceding claims, **characterized in that** the hybrid inorganic/organic layer is additionally modified by one or more organic network modifiers having the general formula (III)
R¹ₙR²ₘR³ₒSiX₍₄₋ₙ₋ₘ₋ₒ₎ (III)
where X is a hydrolysable group after whose hydrolysis a covalent bond of organic network modifier to the inorganic network can be formed,
and R¹, R², and R³ independently of one another are each a nonreactive organic group, with the proviso
that n, m and o are integers, where n+m+o = 1-3 and n = 1 to 3, m = 0 to 2, and o = 0 to 2,
and/or by one or more organic network modifiers having the general formula (IV)
R⁴ₚMX₍ₖ₋ₚ₎ (IV)
where the compound has at least one hydrolysable group X after whose hydrolysis a covalent bond of organic network modifier to the inorganic network can be formed, and has at least one nonreactive organic radical R⁴, where
k is the formal oxidation number of M,
M is Al, Zr or Ti, and
p is an integer from 1 to (k-1).

15. Metallic effect pigments according to any one of the preceding claims, **characterized in that** the platelet-shaped substrate is composed of metals selected from the group consisting of aluminum, copper, iron, zinc, tin, titanium, chromium, cobalt, silver, nickel, antimony, magnesium, zirconium, silicon, and mixtures and alloys thereof, more particularly gold bronzes, brass, stainless steel, and steel.

16. Metallic effect pigments according to Claim 15, **characterized in that** the platelet-shaped substrates consisting substantially of iron have been produced from reduced carbonyliron.

17. Metallic effect pigments according to any one of the preceding claims, **characterized in that** disposed between substrate and hybrid inorganic/organic layer is at least one separate, substantially purely inorganic layer and/or at least one separate layer comprising substantially purely organic polymer.

18. Metallic effect pigments according to any one of the preceding claims, **characterized in that** disposed on the hybrid inorganic/organic layer there is at least one separate, substantially purely inorganic layer and/or at least one separate layer comprising substantially purely organic polymer.

19. Metallic effect pigments according to any one of Claims 17 or 18, **characterized in that** the at least one separate, substantially purely inorganic layer is composed of metal oxide and/or metal oxide hydrate and/or metal suboxide and/or metal hydroxide and/or metal peroxide of elements selected from the group consisting of silicon, titanium, aluminum, zirconium, iron, copper, tin, cobalt, chromium, cerium, zinc, antimony, manganese, nickel, yttrium, molybdenum, vanadium, tantalum, tungsten, and mixtures thereof.

20. Metallic effect pigments according to one of Claims 17 or 18, **characterized in that** the at least one separate, substantially purely organic polymer layer is selected from the group consisting of polyacrylate, polymethacrylate, polyether, polyester, polyamine, polyamide, polyol, polyurethane, polyphenol-formaldehyde, polyolefin, poly-1,2,3,4-tetrafluoroethylene, and mixtures thereof.

21. Metallic effect pigments according to any one of the preceding claims, **characterized in that** an additional layer with one or more surface modifiers has been applied to the surface of the coated metallic effect pigments.

22. Process for producing metallic effect pigments according to Claim 1 with hybrid inorganic/organic layer, which comprises the following steps:
- reacting at least one inorganic network former and at least one organic network former and at least one reactive organic component in a liquid phase to form a coating composition,
- applying the coating composition to platelet-shaped metallic substrates as a hybrid layer,
the platelet-shaped metallic substrates being added to the liquid phase before, during or after the addition or reaction of the at least one inorganic network former and of the at least one organic network former and of the at least one reactive organic component, the hybrid layer having at least partly an inorganic network that has one or more inorganic oxide components, and having at least one organic component, the organic component at least partly being an organic oligomer and/or polymer which is covalently bonded at least partly to the inorganic network.

23. Process according to Claim 22, which comprises the following steps:
(a) providing a reaction mixture of platelet-shaped metallic substrates in a liquid phase,
(b1) adding at least one inorganic network former to the reaction mixture from step (a),
(c1) hydrolysing and/or condensing the inorganic network former added in step (b1),
(d1) adding at least one reactive organic network former and at least one reactive organic component before, during and/or after the hydrolysis and/or condensation of step (c1),
or
(b2) adding at least one reactive organic network former and at least one reactive organic component to the reaction mixture from step (a),
(c2) adding at least one inorganic network former to the reaction mixture from step (b2),
(d2) hydrolysing and/or condensing the inorganic network former added in step (c2),
and
(e) reacting hydrolysed and/or condensed inorganic network former with the reactive organic network former and also with the reactive organic component, with simultaneous and/or subsequent deposition of the hybrid inorganic/organic layer, (f) optionally separating the platelet-shaped substrates coated in step (e) from the reaction mixture.

24. Process according to Claim 22 or 23, **characterized in that** the reactive organic component is added in the form of reactive polymerizable organic monomers, oligomers and/or polymers.

25. Process according to Claim 23, **characterized in that** at least one reactive oligomer and/or polymer is added as reactive organic component.

26. Process according to any one of Claims 22 - 25,
**characterized in that** the at least one organic network former has the general formula (I)
R¹ₙR²ₘR³ₒSiX₍₄₋ₙ₋ₘ₋ₒ₎ (I)
where X is a hydrolysable group after whose hydrolysis a covalent bond of organic network former to the inorganic network can be formed
and R¹ is a reactive organic group which is covalently bondable to an organic oligomer and/or polymer,
R² and R³ independently of one another are each an organic group which may be covalently bondable to an organic oligomer and/or polymer,
with the proviso that
n, m and o are integers, with n+m+o = 1-3 and n = 1 to 3, m = 0 to 2, and o = 0 to 2,
and/or the at least one organic network former has the general formula (II)
(R¹O)ₙ(R²O)ₘ(R³O)ₒMX₍ₖ₋ₙ₋ₘ₋ₒ₎ (II)
where the organometallic compound has at least one hydrolysable group X after whose hydrolysis a covalent bond of organic network former to the inorganic network can be formed, at least one organic radical R¹ which is a reactive organic group which is covalently bondable to an organic oligomer and/or polymer, and R² and R³ independently of one another may each be an organic group which may be covalently bondable to an organic oligomer and/or polymer,
where
k is the formal oxidation number of M,
M is Al, Zr or Ti,
n is an integer from 1 to (k-1),
m is an integer from 0 to (k-2),
o is an integer from 0 to (k-2), and
where n+m+o is an integer from 1 to k-1.

27. Process according to any one of Claims 22 to 26,
**characterized in that** the inorganic oxide component of the hybrid layer is selected from the group consisting of metal oxide, metal suboxide, metal hydroxide, metal oxide hydrate, and mixtures thereof.

28. Process according to any one of Claims 22 to 27, **characterized in that** the inorganic oxide component of the hybrid layer is selected from metal oxide and/or metal suboxide and/or metal hydroxide and/or metal oxide hydrate of elements from the group consisting of silicon, aluminum, titanium, zirconium, iron, cerium, chromium, manganese, zinc, antimony, boron, magnesium, and mixtures thereof.

29. Process according to any one of Claims 22 to 28, **characterized in that** the organic network former is a silane of the general formula (I), the hydrolysable group(s) X being selected independently of one another from the group consisting of halogen, hydroxyl, alkoxy having 1-10 C atoms, which may be straight-chain or branched, and mixtures thereof.

30. Process according to any one of Claims 22 to 28, **characterized in that** the organic network former possesses the general formula (II), the hydrolysable group(s) X being selected independently of one another from the group consisting of halogen, hydroxyl, alkoxy having 1-20 C atoms, which may be straight-chain or branched and may contain heteroatoms, preferably O, S and/or N, in the carbon chain, and mixtures thereof.

31. Process according to any one of Claims 26 to 30, **characterized in that** R¹ is a reactive organic radical which has one or more substituents selected from the group consisting of amino, hydroxyl, thiol, epoxy, acrylate, methacrylate, vinyl, allyl, alkenyl, alkynyl, carboxyl, carboxylic anhydride, isocyanate, cyanate, ureido, and carbamate group and mixtures thereof.

32. Process according to any one of Claims 26 to 31, **characterized in that** R² and R³ are selected independently of one another from the group consisting of H-, (C₁-C₄₀)-alkyl-, (C₁-C₄₀)-fluorinated alkyl-, (C₁-C₄₀)-partially fluorinated alkyl-; (C₂-C₄₀) -alkenyl-, (C₂-C₄₀)-alkynyl-; (C₆-C₃₆) -aryl-, fluorinated (C₆-C₃₆)-aryl-, partially fluorinated (C₆-C₃₆) -aryl-; (C₇-C₄₀)-alkylaryl-, (C₇-C₄₀)-arylalkyl-, fluorinated (C₇-C₄₀)-alkylaryl-, partially fluorinated (C₇-C₄₀)-alkylaryl-; (C₈-C₄₀)-alkenylaryl-, (C₈-C₄₀)-arylalkynyl-, -; (C₈-C₄₀)-alkynylaryl-; (C₅-C₄₀)-cycloalkyl-, (C₆-C₄₀)-alkylcycloalkyl-, (C₆-C₄₀)-cycloalkylalkylsilanes each of which may be substituted by amino, hydroxyl, thiol, epoxy, acrylate, methacrylate, vinyl, allyl, alkenyl, alkynyl, carboxyl, carboxylic anhydride, isocyanate, cyanate, ureido, carbamate and/or ester group and may contain O, N, and S as heteroatoms in the carbon chains and carbon ring systems, and mixtures thereof.

33. Process according to any one of Claims 25 to 32, **characterized in that** the reactive organic oligomer and/or polymer is constructed from reactive monomers provided with functionalities from the group consisting of amino, hydroxyl, thiol, epoxy, acrylate, methacrylate, vinyl, allyl, alkenyl, alkynyl, carboxyl, carboxylic anhydride, isocyanate, cyanate, ureido, and carbamate group and mixtures thereof.

34. Process according to any one of Claims 25 to 32, **characterized in that** the reactive oligomer and/or polymer is selected from the group consisting of polyacrylates, polymethacrylates, polyethers, polyesters, polyamines, polyamides, polyols, polyurethanes, polyolefins, and mixtures thereof, and for activation is optionally reacted with an organic network former prior to the addition to the reaction mixture.

35. Process according to any one of Claims 22 to 34, **characterized in that** the reactive organic component prior to addition is formed by reacting one or more different organic network formers with reactive groups R¹ with one another, optionally with addition of polymerization initiators, and subsequently carrying out addition.

36. Process according to Claim 25, **characterized in that** the reactive organic oligomer and/or polymer is selected from the group consisting of silanol- and/or methoxy-terminated silicones, trialkoxysilane-modified polyethyleneimines, polyarylalkylsilasesquioxanes, aminosilane-modified polyethylene oxide urethanes.

37. Process according to Claim 25, **characterized in that** the reactive organic oligomer and/or polymer is selected from the group consisting of polyacrylates, polymethacrylates, polyethers, polyesters, polyamines, polyamides, polyols, polyurethanes, and polyolefins, these oligomers and/or polymers possessing reactive functions.

38. Process according to any one of Claims 22 to 37, **characterized in that,** before, during and/or after the addition of the reactive organic network former, additionally at least one organic network modifier is added.

39. Process according to Claim 38, **characterized in that** the additionally added at least one organic network modifier possesses the general formula (III)
R¹ₙR²ₘR³ₒSiX₍₄₋ₙ₋ₘ₋ₒ₎ (III)
where X is a hydrolysable group after whose hydrolysis a covalent bond of organic network modifier to the inorganic network can be formed,
and R¹, R², and R³ independently of one another are each a nonreactive organic group, with the proviso
that n, m and o are integers, where n+m+o = 1-3 and n = 1 to 3, m = 0 to 2, and o = 0 to 2,
and/or the additionally added at least one organic network modifier has the general formula (IV)
R⁴ₚMX₍ₖ₋ₚ₎ (IV)
where the organometallic compound has at least one hydrolysable group X after whose hydrolysis a covalent bond of organic network modifier to the inorganic network can be formed, and has at least one nonreactive organic radical R⁴, where
k is the formal oxidation number of M,
M is Al, Zr or Ti, and
p is an integer from 1 to (k-1).

40. Process according to any one of Claims 22 to 39, **characterized in that,** before the hybrid inorganic/organic layer is applied to the platelet-shaped substrate, one or more substantially purely inorganic and/or substantially purely organic layers are applied.

41. Process according to any one of Claims 22 to 40, **characterized in that** after the hybrid inorganic/organic layer is applied, one or more substantially purely inorganic and/or substantially purely organic layers are applied.

42. Process according to any one of Claims 22 to 41, **characterized in that** the outermost layer applied is a layer with one or more surface modifiers.

43. Process according to any one of Claims 22 to 42, **characterized in that** aqueous and/or alcoholic solutions are used as liquid phase.

44. Process according to any one of Claims 23 to 43, **characterized in that** the reaction temperature in steps (b) to (e) lies in a range from about 0°C to about 100°C, preferably from about 10°C to about 80°C.

45. Process according to any one of Claims 23 to 44, **characterized in that** the pH in steps (b) to (e) lies in a range from 1.5 to 12, preferably from 7 to 10.

46. Use of the platelet-shaped metallic effect pigment according to any one of Claims 1 to 21 in varnishes, automobile finishes, paints, printing inks, powder coating materials, architectural paints, plastics, security printing inks, ceramics, glass or cosmetic preparations.

47. Use of a platelet-shaped metallic effect pigment according to any one of Claims 1 to 21 as IR-reflecting pigments in masonry paints and/or architectural paints.

## Revendications

1. Pigments à effet métallique avec revêtement, comprenant un substrat métallique en forme de plaquette,
**caractérisé en ce**
**que** le revêtement comprend au moins une couche mixte anorganique/organique, la couche mixte présentant au moins en partie un réseau anorganique, qui présente un ou plusieurs composants oxyde anorganique, et au moins un composant organique, le composant organique étant au moins en partie un oligomère et/ou un polymère organique, qui est lié au moins en partie au réseau anorganique par le biais d'un ou plusieurs agents de réticulation organique de façon covalente.

2. Pigments à effet métallique selon la revendication 1,
**caractérisé en ce**
**que** la liaison au moins partiellement covalente entre les composants oxyde anorganique et l'oligomère et/ou le polymère organique est réalisée par au moins en partie un ou plusieurs agents réticulants organiques, qui présente la formule générale (I) suivante :
-R¹ₙR²ₘR³ₒSiX₍₄₋ₙ₋ₘ₋ₒ₎ (I)
où X correspond à un groupe hydrolysable, après l'hydrolyse duquel une liaison covalente entre l'agent de réticulation organique et le réseau anorganique peut être formée, et R¹ correspond à un groupe organique réactif, qui peut être relié de façon covalente avec l'oligomère et/ou le polymère organique, R² et R³ sont indépendamment l'un de l'autre un groupe organique, qui peut être relié de façon covalente à l'oligomère et/ou au polymère organique,
en précisant
**que** n, m et o sont des nombres entiers, n+m+o=1-3 et n= 1 à 3, m=0 à 2 et o=0 à 2,
et/ou présente la formule générale (II) suivante :
(R¹O)ₙ(R²O)ₘ(R³O)ₒMX₍ₖ₋ₙ₋ₘ₋ₒ₎ (II)
où X correspond à un groupe hydrolysable, après l'hydrolyse duquel une liaison covalente entre l'agent de réticulation organique et le réseau anorganique peut être formée, et un résidu organique R¹ correspond à un groupe organique réactif, qui peut être relié de façon covalente avec l'oligomère et/ou le polymère organique, R² et R³ sont indépendamment l'un de l'autre un groupe organique, qui peut être relié de façon covalente à l'oligomère et/ou au polymère organique,
où
k correspond au chiffre d'oxydation formel de M,
M est Al, Zr ou Ti,
n correspond à un nombre entier de 1 à (k-1),
m correspond à un nombre entier de 0 à (k-2)
o correspond à un nombre entier de 0 à (k-2), et
n+m+o est un nombre entier de 1 à k-1.

3. Pigments à effet métallique selon la revendication 1 ou 2,
**caractérisés en ce**
**que** les composants oxyde anorganiques de la couche mixte sont choisis dans le groupe constitué d'oxyde métallique, de suboxyde métallique, d'hydroxyde métallique, d'hydrate d'oxyde métallique et de mélanges de ceux-ci.

4. Pigments à effet métallique selon la revendication 3,
**caractérisés en ce**
**que** les composants oxyde anorganique de la couche mixte constituée d'oxyde métallique et/ou de suboxyde métallique et/ou d'hydroxyde métallique et/ou d'hydrate d'oxyde métallique sont choisis dans le groupe formé par le silicium, l'aluminium, le titane, le zirconium, le fer, le cérium, le chrome, le manganèse, le zinc, l'étain, l'antimoine, le bore, le magnésium et leurs mélanges.

5. Pigments à effet métallique selon l'une quelconque des revendications 2 à 4,
**caractérisés en ce**
**que** l'agent de réticulation organique est un silane selon la formule générale (I), le ou les groupes hydrolysables X étant choisis indépendamment les uns des autres dans le groupe constitué de l'halogène, l'hydroxy, l'alcoxy avec 1 à 10 atomes de carbone, qui peuvent être linéaires ou ramifiés, et des mélanges de ceux-ci.

6. Pigments à effet métallique selon l'une quelconque des revendications 2 à 4,
**caractérisés en ce**
**que** l'agent de réticulation organique possède la formule générale (II), dans laquelle le ou les groupe(s) hydrolysable(s) X est/sont choisi(s) indépendamment les un des autres dans le groupe constitué de l'halogène, l'hydroxy, l'alcoxy avec de 1 à 20 atomes de carbone, qui peuvent être linéaires ou ramifiés ou bien présenter des hétéroatomes, de préférence O, S et/ou N, dans le chaînon de carbone, et de mélanges de ceux-ci.

7. Pigments à effet métallique selon l'une quelconque des revendications 2 à 6,
**caractérisés en ce**
**que** R¹ est un résidu organique, qui présente un ou plusieurs substituants, qui sont choisis dans le groupe constitué des groupes amino, hydroxy, thiol, époxy, acrylate, méthacrylate, vinyle, allyle, alcényle, alcinyle, carboxy, carboxylanhydride, isocyanate, cyanate, uréide, carbamate et des mélanges de ceux-ci.

8. Pigments à effet métallique selon l'une quelconque des revendications 2-7,
**caractérisés en ce**
**que** R² et R³ sont choisis indépendamment l'un de l'autre dans le groupe constitué de H-, alcyle en C₁-C₄₀, alcyle fluoré en C₁-C₄₀, alcyle partiellement fluoré en C₁-C₄₀, alcényle en C₂-C₄₀, alcinyle en C₂-C₄₀, aryle en C₆-C₃₆, aryle fluoré en C₆-C₃₆, aryle partiellement fluoré en C₆-C₃₆, alcylaryle en C₇-C₄₀, arylalcyle en C₇-C₄₀, alcylaryle fluoré en C₇-C₄₀, alcylaryle partiellement fluoré en C₇-C₄₀, alcénylaryle en C₈-C₄₀, arylalcinyle en C₈-C₄₀, alcinylaryle en C₈-C₄₀, cycloalcyle en C₅-C₄₀, alcylcycloalcyle en C₆-C₄₀, cycloalcylalcylsilane en C₆-C₄₀, qui peuvent être substitués chacun par un groupe amino, hydroxy, thiol, époxy, acrylate, méthacrylate, vinyle, allyle, alcényle, alcinyle, carboxy, carboxylanhydride, isocyanate, cyanate, uréide, carbamate et/ou ester et qui peuvent contenir 0, N et S comme hétéroatomes dans les chaînons de carbone ou les systèmes d'anneaux de carbone, ainsi que les mélanges de ceux-ci.

9. Pigments à effet métallique selon l'une quelconque des revendications précédentes,
**caractérisés en ce**
**que** l'oligomère organique et/ou le polymère est constitué de monomères qui sont pourvus des fonctionnalités du groupe formé par les groupes amino, hydroxy, thiol, époxy, acrylate, méthacrylate, vinyle, allyle, alcényle, alcinyle, carboxy, carboxylanhydride, isocyanate, cyanate, uréide et carbamate et des mélanges de ceux-ci.

10. Pigments à effet métallique selon l'une quelconque des revendications 1 à 8,
**caractérisés en ce**
**que** les composants organiques sont formés à partir d'oligomères organiques réactifs et/ou de polymères, qui présentent des groupes réactifs, qui peuvent se lier au réseau anorganique et/ou au moins au groupe R¹ de l'agent de réticulation organique.

11. Pigments à effet métallique selon la revendication 10,
**caractérisés en ce**
**que** l'oligomère organique réactif et/ou le polymère est choisi dans le groupe constitué de silicones terminés par un silanol et/ou un méthoxy, des polyéthylènimines modifiés par du trialcoxysilane, des silsesquioxanes de polyarylalcyle, des oxyduréthanes de polyéthylène modifiés par un aminosilane et des mélanges de ceux-ci.

12. Pigments à effet métallique selon la revendication 10,
**caractérisés en ce**
**que** l'oligomère et/ou le polymère organique est choisi dans le groupe constitué des polyacrylates, polyméthacrylates, polyéthers, polyesters, polyamines, polyamides, polyols, polyuréthanes et polyoléfines, ces oligomères et/ou polymères présentant des groupes réactifs fonctionnels, qui peuvent se lier au réseau anorganique ou à un agent de réticulation organique.

13. Pigments à effet métallique selon l'une quelconque des revendications 2 à 12,
**caractérisés en ce**
**que** l'oligomère organique et/ou le polymère est lié de façon covalente à la couche mixte anorganique/organique par l'intermédiaire du groupe fonctionnel R¹ d'un ou plusieurs agents réticulants organiques.

14. Pigments à effet métallique selon l'une quelconque des revendications,
**caractérisés en ce**
**que** la couche mixte anorganique/organique est modifiée en plus par un ou plusieurs modificateurs de réseau organiques de formule générale (III) :
R¹ₙR²ₘR³ₒSiX₍₄₋ₙ₋ₘ₋ₒ₎ (III)
où X correspond à un groupe hydrolysable, après l'hydrolyse duquel une liaison covalente peut être formée entre un modificateur de réseau organique et le réseau anorganique,
et R¹, R² et R³ correspondent indépendamment l'un de l'autre à un groupe organique non réactif, en précisant que
n, m et o sont des nombres entiers, où n+m+o=1-3 et n=1 à 3, m=0 à 2 et o=0 à 2,
et/ou modifié par un ou plusieurs modificateurs de réseau organique de formule générale (IV)
R⁴ₚMX₍ₖ₋ₚ₎ (IV)
le composé étant au moins un groupe X hydrolysable, après l'hydrolyse duquel une liaison covalente peut se former entre un modificateur de réseau et le réseau anorganique, et présente au moins un radical R⁴ organique non réactif, où
k correspond au chiffre d'oxydation formel de M,
M est Al, Zr ou Ti, et
p est un nombre entier de 1 à (k-1).

15. Pigments à effet métallique selon l'une quelconque des revendications précédentes,
**caractérisés en ce**
**que** le substrat en forme de plaquette est dans un métal choisi dans le groupe formé de l'aluminium, du cuivre, du fer, du zinc, de l'étain, du titane, du chrome, du cobalt, de l'argent, de l'antimoine, du magnésium, du zirconium, du silicium ainsi que des mélanges et alliages de ceux-ci, en particulier le bronze d'or, le laiton, l'acier noble et l'acier.

16. Pigments à effet métallique selon la revendication 15,
**caractérisés en ce**
**que** le substrat sous forme de plaquettes constitué pour l'essentiel de fer est fabriqué à partir de fer-carbonyle réduit.

17. Pigments à effet métallique selon l'une quelconque des revendications précédentes,
**caractérisés en ce que**
au moins une couche distincte pour l'essentiel purement anorganique et/ou **en ce qu'**au moins une couche distincte en polymère pour l'essentiel purement organique est disposée entre la couche mixte anorganique/organique et le substrat.

18. Pigments à effet métallique selon l'une quelconque des revendications précédentes,
**caractérisés en ce que**
au moins une couche distincte pour l'essentiel purement anorganique et/ou au moins une couche distincte pour l'essentiel en polymère organique pur est disposée sur la couche mixte anorganique/organique.

19. Pigments à effet métallique selon la revendication 17 ou 18,
**caractérisés en ce que**
au moins une couche distincte pour l'essentiel purement anorganique est constituée d'oxyde métallique et/ou d'hydrate d'oxyde métallique et/ou de suboxyde métallique et/ou d'hydroxyde métallique et/ou de peroxyde métallique d'éléments choisis dans le groupe constitué de silicium, titane, aluminium, zirconium, fer, cuivre, étain, cobalt, chrome, cérium, zinc, antimoine, manganèse, nickel, yttrium, molybdène, vanadium, tantale, wolfram et leurs mélanges.

20. Pigments à effet métallique selon la revendication 17 ou 18,
**caractérisés en ce que**
au moins une couche polymère pour l'essentiel purement organique, distincte, est choisie dans le groupe constitué de polyacrylate, polyméthacrylate, polyéther, polyester, polyamine, polyamide, polyol, polyuréthane, polyphénolformaldehyde, polyoléfine, poly-1,2,3,4-tétrafluoroéthylène et des mélanges de ceux-ci.

21. Pigments à effet métallique selon l'une quelconque des revendications précédentes,
**caractérisés en ce que**
une couche supplémentaire avec un ou plusieurs modificateurs de surface est déposée sur la surface des pigments à effet métallique enrobés.

22. Procédé de fabrication de pigments à effet métallique selon la revendication 1 avec une couche mixte anorganique/organique, qui comprend les étapes suivantes :
- mélange d'au moins un modificateur de réseau anorganique et d'au moins un modificateur de réseau organique et d'au moins un composant organique réactif dans une phase liquide avec formation d'une composition de revêtement,
- dépôt de la composition de revêtement, servant de couche mixte, sur des substrats métalliques en forme de plaquettes,
les substrats métalliques en formes de plaquettes étant ajoutés à la phase liquide avant, pendant ou après l'ajout ou le mélange d'au moins un modificateur de réseau anorganique et au moins d'un modificateur de réseau organique et au moins d'un composant organique réactif,
la couche mixte présentant au moins en partie un réseau anorganique, qui présente un ou plusieurs composants oxyde anorganique, et au moins un composant organique, le composant organique étant au moins en partie un oligomère et/ou un polymère organique, lequel est lié au moins en partie au réseau anorganique de façon covalente.

23. Procédé selon la revendication 22, qui comprend les étapes suivantes :
(a) préparation d'un mélange réactif de substrats métalliques en forme de plaquettes dans une phase liquide,
(b1) ajout d'au moins un agent de réticulation anorganique au mélange réactif de l'étape (a),
(c1) hydrolyse et/ou condensation de l'agent de réticulation anorganique ajouté à l'étape (b1),
(d1) ajout d'au moins un agent de réticulation organique réactif et d'au moins un composant organique réactif avant, pendant et/ou après l'hydrolyse et/ou la condensation de l'étape (c1),
ou
(b2) ajout d'au moins un agent de réticulation organique réactif et d'au moins un composant organique réactif au mélange réactif de l'étape (a),
(c2) ajout d'au moins un agent de réticulation anorganique au mélange réactif de l'étape (b2),
(d2) hydrolyse et/ou condensation de l'agent de réticulation anorganique ajouté à l'étape (c2),
et
(e) mélange de l'agent de réticulation anorganique hydrolysé et/ou condensé avec l'agent de réticulation organique réactif ainsi qu'avec les composants organiques réactifs avec élimination simultanée et/ou consécutive de la couche mixte anorganique/organique,
(f) isolement optionnel des substrats en forme de plaquettes enrobés à l'étape (e) du mélange réactif.

24. Procédé selon la revendication 22 ou 23,
**caractérisé en ce que**
le composant organique réactif est ajouté sous la forme de monomères, oligomères et/ou polymères organiques polymérisables réactifs.

25. Procédé selon la revendication 23,
**caractérisé en ce que**
le composant organique réactif ajouté est au moins un oligomère et/ou polymère réactif.

26. Procédé selon l'une quelconque des revendications 22 à 25,
**caractérisé en ce que**
au moins un agent de réticulation organique présente la formule générale (I)
R¹ₙR²ₘR³ₒSiX₍₄₋ₙ₋ₘ₋ₒ₎ (I)
où X est un groupe hydrolysable, après l'hydrolyse duquel une liaison covalente peut se créer entre l'agent de réticulation organique et le réseau anorganique, et R¹ est un groupe organique réactif, qui peut se lier à un oligomère organique et/ou un polymère de façon covalente, R² et R³ correspondent indépendamment l'un de l'autre à un groupe organique, et peuvent être liés de façon covalente à un oligomère et/ou un polymère organique,
en précisant
que n, m et o sont des nombres entiers, n+m+o=1-3 et n=1 à 3, m=0 à 2 et o=0 à 2,
et/ou présente au moins un agent de réticulation organique selon la formule générale (II)
(R¹O)ₙ(R²O)ₘ(R³O)ₒMX₍ₖ₋ₘ₋ₙ₋ₒ₎ (II)
le composé organique présentant au moins un groupe hydrolysable X, après l'hydrolyse duquel une liaison covalente peut se créer entre l'agent de réticulation organique et le réseau anorganique, au moins un radical organique R¹, qui correspond à un groupe organique réactif, qui peut se lier à un oligomère et/ou un polymère organique de façon covalente, et R² et R³ peuvent être indépendamment l'un de l'autre un groupe organique, qui peuvent se lier de façon covalente à un oligomère et/ou polymère organique, où
k correspond au chiffre d'oxydation formel de M,
M est Al, Zr ou Ti,
n correspond à un nombre entier de 1 à (k-1),
m correspond à un nombre entier de 0 à (k-2)
o correspond à un nombre entier de 0 à (k-2), et
n+m+o est un nombre entier de 1 à k-1.

27. Procédé selon l'une quelconque des revendications 22 à 26,
**caractérisé en ce que**
le composant oxyde anorganique de la couche mixte est choisi dans le groupe constitué d'oxyde métallique, d'hydrate d'oxyde métallique, de suboxyde métallique, d'hydroxyde métallique et de mélanges de ceux-ci.

28. Procédé selon l'une quelconque des revendications 22 à 27,
**caractérisé en ce que**
le composant oxyde organique de la couche mixte fait d'oxyde métallique et/ou hydrate d'oxyde métallique et/ou suboxyde métallique et/ou hydroxyde métallique est choisi parmi des éléments du groupe constitué par le silicium, l'aluminium, le titane, le zirconium, le fer, le cérium, le chrome, le manganèse, le zinc, l'antimoine, le bore, le magnésium et leurs mélanges.

29. Procédé selon l'une quelconque des revendications 22 à 28,
**caractérisé en ce que**
l'agent de réticulation organique est un silane selon la formule générale (I), dans laquelle le ou les groupes hydrolysables X sont choisis indépendamment l'un de l'autre dans le groupe constitué de l'halogène, l'hydroxy, l'alcoxy avec de 1 à 10 atomes de carbone, qui peuvent être linéaires ou ramifiés, et des mélanges de ceux-ci.

30. Procédé selon l'une quelconque des revendications 22 à 28,
**caractérisé en ce que**
l'agent de réticulation organique répond à la formule générale (II), dans laquelle le ou les groupe(s) hydrolysable(s) X est/sont choisi(s) indépendamment les uns des autres dans le groupe constitué de l'halogène, l'hydroxy, l'alcoxy avec 1 à 20 atomes de carbone, qui peuvent être linéaires ou ramifiés et qui présentent des hétéroatomes, de préférence 0, S et/ou N, dans les chaînons de carbone, et des mélanges de ceux-ci.

31. Procédé selon l'une quelconque des revendications 26 à 30,
**caractérisé en ce que**
R¹ est un radical organique réactif, qui présente un ou plusieurs substituants, qui sont choisis dans le groupe constitué des groupes amino, hydroxy, thiol, époxy, acrylate, méthacrylate, vinyle, allyle, alcényle, alcinyle, carboxy, carboxylanhydride, isocyanate, uréide, carbamate et de mélanges de ceux-ci.

32. Procédé selon l'une quelconque des revendications 26 à 31,
**caractérisé en ce que**
R² et R³ sont choisis indépendamment l'un de l'autre dans le groupe constitué de H-, alcyle en C₁-C₄₀, alcyle fluoré en C₁-C₄₀, alcyle partiellement fluoré en C₁-C₄₀, alcényle en C₂-C₄₀, alcinyle en C₂-C₄₀, aryle en C₆-C₃₆, aryle fluoré en C₆-C₃₆, aryle partiellement fluoré en C₆-C₃₆, alcylaryle en C₇-C₄₀, arylalcyle en C₇-C₄₀, alcylaryle fluoré en C₇-C₄₀, alcylaryle partiellement fluoré en C₇-C₄₀, alcénylaryle en C₈-C₄₀, arylalcinyle en C₈-C₄₀, alcinylaryle en C₈-C₄₀, cycloalcyle en C₅-C₄₀, alcylcycloalcyle en C₆-C₄₀, cycloalcylalcylsilane en C₆-C₄₀, qui peuvent être substitués chacun par un groupe amino, hydroxy, thiol, époxy, acrylate, méthacrylate, vinyle, allyle, alcényle, alcinyle, carboxy, carboxylanhydride, isocyanate, cyanate, uréide, carbamate et/ou ester et qui peuvent contenir 0, N et S comme hétéroatomes dans les chaînons de carbone ou les systèmes d'anneaux de carbone, ainsi que les mélanges de ceux-ci.

33. Procédé selon l'une quelconque des revendications 25 à 32,
**caractérisé en ce**
**que** l'oligomère et/ou polymère organique réactif est formé de monomères réactifs, qui sont pourvus de fonctionnalités issues du groupe constitué par les groupes amino, hydroxy, thiol, époxy, acrylate, méthacrylate, vinyle, allyle, alcényle, alcinyle, carboxy, carboxylanhydride, isocyanate, cyanate, uréide et carbamate et de mélanges de ceux-ci.

34. Procédé selon l'une quelconque des revendications 25 à 32,
**caractérisé en ce que**
l'oligomère et/ou le polymère organique réactif est choisi dans le groupe constitué de polyacrylates, polyméthacrylates, polyéthers, polyesters, polyamines, polyamides, polyols, polyuréthanes, polyoléfines et de mélanges de ceux-ci, et mélangés en option avec un agent de réticulation organique pour une activation avant l'ajout dans le mélange réactif.

35. Procédé selon l'une quelconque des revendications 22 à 34,
**caractérisé en ce que**
le composant organique réactif est formé avant d'être ajouté, dans la mesure où un ou plusieurs agents réticulants organiques différents sont mélangés avec des groupes réactifs R¹, en option avec ajout d'initiateurs de polymérisation, puis ajoutés.

36. Procédé selon la revendication 25,
**caractérisé en ce que**
l'oligomère et/ou le polymère organique réactif est choisi dans le groupe constitué de silicones terminés par un silanol et/ou un méthoxy, des silsesquioxanes de polyarylalcyle, des polyéthylènimines modifiés par du trialcoxysilane, des oxyduréthanes de polyéthylène modifiés par un aminosilane et des mélanges de ceux-ci.

37. Procédé selon la revendication 25,
**caractérisé en ce**
**que** l'oligomère et/ou le polymère organique réactif est choisi dans le groupe constitué des polyacrylates, polyméthacrylates, polyéthers, polyesters, polyamines, polyamides, polyols, polyuréthanes et polyoléfines, ces oligomères et/ou polymères disposant de fonctions réactives.

38. Procédé selon l'une quelconque des revendications 22 à 37,
**caractérisé en ce que**
au moins un modificateur de réseau organique est ajouté avant, pendant ou après l'ajout de l'agent de réticulation organique réactif.

39. Procédé selon la revendication 38,
**caractérisé en ce que**
le ou les modificateurs de réseau organiques présente/présentent la formule générale (III)
R¹ₙR²ₘR³ₒSiX₍₄₋ₙ₋ₘ₋ₒ₎ (III)
où X correspond à un groupe hydrolysable, après l'hydrolyse duquel une liaison covalente peut être formée entre un modificateur de réseau organique et le réseau anorganique,
et R¹, R² et R³ correspondent indépendamment l'un de l'autre à un groupe organique non réactif,
en précisant
que n, m et o sont des nombres entiers, où n+m+o=1-3 et n=1 à 3, m=0 à 2 et o=0 à 2,
et/ou le ou les modificateurs de réseau organiques présente/présentent la formule générale (IV)
R⁴ₚMX₍ₖ₋ₚ₎ (IV)
le composé étant au moins un groupe X hydrolysable, après l'hydrolyse duquel une liaison covalente peut se former entre un modificateur de réseau et le réseau anorganique, et présente au moins un radical R⁴ organique non réactif, où
k correspond au chiffre d'oxydation formel de M,
M est Al, Zr ou Ti, et
p est un nombre entier de 1 à (k-1).

40. Procédé selon l'une quelconque des revendications 22 à 39,
**caractérisé en ce que**
une ou plusieurs couches anorganiques pures pour l'essentiel et/ou organiques pures pour l'essentiel sont déposées avant l'application de la couche mixte anorganique/organique sur le substrat en forme de plaquettes.

41. Procédé selon l'une quelconque des revendications 22 à 40,
**caractérisé en ce que**
une ou plusieurs couches anorganiques pures pour l'essentiel et/ou organiques pures pour l'essentiel sont déposées après l'application de la couche mixte anorganique/organique.

42. Procédé selon l'une quelconque des revendications 22 à 41,
**caractérisé en ce que**
une couche avec un ou plusieurs modificateurs de surface est déposée comme couche extérieure.

43. Procédé selon l'une quelconque des revendications 22 à 42,
**caractérisé en ce que**
des solutions aqueuses et/ou alcooliques sont utilisées comme phase liquide.

44. Procédé selon l'une quelconque des revendications 22 à 43,
**caractérisé en ce que**
la température de réaction aux étapes (b) à (e) va de 0 °C à 100 °C environ, de préférence de 10 °C à 80 °C environ.

45. Procédé selon l'une quelconque des revendications 23 à 44,
**caractérisé en ce que**
la valeur du pH aux étapes (b) à (e) se situe dans la plage de 1,5 à 12, de préférence de 7 à 10.

46. Utilisation du pigment à effet métallique en forme de plaquettes selon l'une quelconque des revendications 1 à 21 dans des peintures, des peintures pour automobiles, des couleurs, des couleurs d'impression, des peintures en poudres, des enduits pour bâtiments, des objets plastiques, des encres d'impression de sécurité, des objets céramiques, du verre ou des préparations cosmétiques.

47. Utilisation d'un pigment à effet métallique en forme de plaquettes selon l'une quelconque des revendications 1 à 21 comme pigment reflétant les infrarouges dans des enduits pour façades et/ou bâtiments.
